# FASCICULE DE BREVET EUROPEEN

(11) **EP 2 358 817 B1**
(45) Date de publication et mention de la délivrance du brevet: **20.04.2016**
(21) Numéro de dépôt: 09796018.1
(22) Date de dépôt: 20.11.2009
(51) Int. Cl.: C08L 71/02, G02F 1/15, H01B 1/12, B64G 1/44, B64G 1/50, C08J 3/24, C08L 23/02, G02F 1/17

(54) **RESEAUX INTERPENETRES DE POLYMERES A EMISSIVITE MODULABLE.**
INTERPENETRIERENDE POLYMERE NETZWERKE MIT EINSTELLBARER EMISSIVITÄT
INTERPENETRATING POLYMER NETWORKS WITH ADJUSTABLE EMISSIVITY

(30) Priorité: 20.11.2008 US 116314 P
(43) Date de publication de la demande: 24.08.2011
(73) Titulaire: Université de Cergy-Pontoise, 95011 Cergy-Pontoise Cedex (FR)
(72) Inventeur: CHEVROT, Claude, F-78100 Saint Germain En Laye (FR); TEYSSIE, Dominique, F-78230 Le Pecq (FR); VIDAL, Frédéric, F-78780 Maurecourt (FR); AUBERT, Pierre-Henri, F-95520 Osny (FR); VERGE, Pierre, F-59300 Valenciennes (FR); BEOUCH, Layla, F-95300 Pontoise (FR); TRAN-VAN, François, F-37230 Fondettes (FR); FABRE-FRANCKE, Isabelle, F-92000 Nanterre (FR)
(74) Mandataire: Novagraaf Technologies
(86) Numéro de dépôt international: PCT/FR2009/001335
(87) Numéro de publication internationale: WO 2010/058108

(56) Documents cités:
- FR-A- 2 857 759
- TRAN-VAN ET AL: "Self-supported semi-interpenetrating polymer networks for new design of electrochromic devices" ELECTROCHIMICA ACTA, ELSEVIER SCIENCE PUBLISHERS, BARKING, GB, vol. 53, no. 12, 16 janvier 2008 (2008-01-16), pages 4336-4343, XP022514212 ISSN: 0013-4686
- CHO M S ET AL: "A solid state actuator based on the PEDOT/NBR system" SENSORS AND ACTUATORS B, ELSEVIER SEQUOIA S.A., LAUSANNE, CH, vol. 119, no. 2, 7 décembre 2006 (2006-12-07), pages 621-624, XP025112359 ISSN: 0925-4005 [extrait le 2006-12-07]
- VERGE P ET AL: "Thermal ageing of poly(ethylene oxide)/poly(3,4-ethylenedioxythiophe ne) semi-IPNs" EUROPEAN POLYMER JOURNAL, PERGAMON PRESS LTD. OXFORD, GB, vol. 44, no. 11, 1 novembre 2008 (2008-11-01), pages 3864-3870, XP025628078 ISSN: 0014-3057 [extrait le 2008-08-07]
- PLESSE ET AL: "Synthesis and characterization of conducting interpenetrating polymer networks for new actuators" POLYMER, ELSEVIER SCIENCE PUBLISHERS B.V, GB, vol. 46, no. 18, 23 août 2005 (2005-08-23), pages 7771-7778, XP005009244 ISSN: 0032-3861
- WINTHER-JENSEN B ET AL: "Interpenetrating networks of two conducting polymers" SYNTHETIC METALS, ELSEVIER SEQUOIA, LAUSANNE, CH, vol. 148, no. 2, 31 janvier 2005 (2005-01-31), pages 105-109, XP025271048 ISSN: 0379-6779 [extrait le 2005-01-31]

## Description

### Domaine technique

La présente invention concerne des matériaux sous forme de réseau semi-interpénétré de polymères (semi-RIP) ou de réseau interpénétré de polymères (RIP) de structure symétrique B-A-B dans lequel A est un réseau de polymère (ou un RIP) conducteur ionique sous la forme d'une couche et B est un polymère conducteur électronique choisi parmi le poly(3,4-éthylènedioxythiophène) (PEDOT) ou le poly(3,4-propylènedioxythiophène) ou l'un de ces polymères substitué par une chaîne aliphatique, un groupement alcoxy ou encore un groupement polaire tel que carboxylate, sulfonate, alcoolate, et est interpénétré dans la couche de réseau de polymère (ou de RIP) A; et le polymère B est présent à une teneur de 0,5 à 2,5% en masse par rapport au poids total du matériau. L'invention se rapporte également à un procédé de préparation de ces matériaux, ainsi qu'à un dispositif électroémissif (DEE) comprenant un de ces matériaux. L'invention se rapporte, en outre, à l'utilisation d'un matériau selon l'invention comme matériau de furtivité, matériau pour améliorer l'isolation thermique, matériau pour le remplacement des volets vénitiens des panneaux des satellites artificiels, et/ou matériau pour contrôler la température suivant l'exposition solaire ou la température extérieure.

Dans la description ci-dessous, les références entre crochets [ ] renvoient à la liste des références présentée à la fin du texte.

### Etat de la technique

Chaque corps possède sa propre émissivité. L'émissivité peut se définir comme la propriété de la surface d'un corps d'émettre de la chaleur par radiation, exprimée par le rapport entre la radiation émise par cette surface et celle émise par un corps qui absorbe et transmet toute la radiation qui l'atteint (appelé corps noir); les deux corps étant à la même température. L'émissivité représente donc la capacité d'un matériau à absorber ou à émettre de la chaleur. Un dispositif capable de moduler son émissivité peut être utilisé dans différents domaines tels que le camouflage infrarouge ou les économies d'énergies. Parmi les systèmes à émissivité variable, les dispositifs électro-émissifs suscitent beaucoup d'intérêt en raison de la facilité à appliquer une tension électrique.

Seul un des composants des dispositifs électro-émissifs est capable de moduler son émissivité : c'est la couche active. La composition des systèmes électro-émissifs ne se résume cependant pas à cette couche active : ils sont usuellement constitués de plusieurs couches empilées (entre 5 et 7) ayant toutes un rôle bien précis et indispensables aux systèmes électro)émissifs. De ce fait, leur développement est à la fois onéreux et complexe.

Il existe donc un réel besoin de simplifier l'architecture des dispositifs électro-émissifs, en concevant des matériaux ayant une bonne capacité à moduler leur émissivité sous une forme permettant un développement moins complexe.

### Description de l'invention

La présente invention a précisément pour but de répondre à ces besoins et inconvénients de l'art éntérieur en fournissant un matériau sous forme de réseau semi-interpénétré de polymères (semi-RIP) ou de réseau interpénétré de polymères (RIP) de structure symétrique B-A-B dans lequel :
- A est un réseau de polymère (ou un RIP) conducteur ionique sous la forme d'une couche;
- B est un polymère conducteur électronique choisi parmi le poly(3,4-éthylènedioxythiophène) (PEDOT) ou le poly(3,4-propylènedioxythiophène) ou l'un de ces polymères substitué par une chaîne aliphatique, un groupement alcoxy ou encore un groupement polaire tel que carboxylate, sulfonate, alcoolate, et est interpénétré dans la couche de réseau de polymère (ou de RIP) A ; et
- Le polymère B est présent à une teneur de 0,5 à 2,5% en masse par rapport au poids total du matériau.

De façon générale, les Réseaux Interpénétrés de Polymères (RIPs), conducteurs de l'électricité, présentent une structure de type gradient : la surface est riche en polymère conducteur électronique, alors que le coeur en est totalement dépourvu. Sur la base de cette particularité morphologique des RIP, et de manière tout à fait inattendue, les inventeurs ont réussi à concevoir un matériau adapté notamment pour le développement d'un dispositif électro-émissif.

Le matériau selon l'invention possède toutes les couches indispensables à un dispositif électro-émissif (couche à émissivité variable, réserve d'ions, support mécanique, collecteurs de courant) et, de surcroît, se présente sous la forme d'un seul bloc ce qui simplifie l'architecture de ce type de dispositif et, de ce fait, son développement. Par ailleurs, le matériau de l'invention présente l'avantage d'avoir la capacité à moduler son émissivité.

Dans le matériau selon l'invention, le réseau de polymère (ou le RIP) A peut être un réseau de copolymère ou un réseau interpénétré de (co)polymères.

Dans le cadre de la présente invention, on entend par « réseau interpénétré de polymères » (ou RIP) au sens de la présente invention une matrice ou assemblage constitué d'au moins deux polymères réticulés l'un dans l'autre formant ainsi deux ou plusieurs réseaux. Cet assemblage de polymères combine ainsi les propriétés des polymères qui le constituent.

On entend par « réseau semi-interpénétré de polymère » (ou semi-RIP) au sens de la présente invention une matrice ou un assemblage constitué d'au moins un polymère réticulé, formant un réseau, et d'au moins un polymère non réticulé, enchevêtré dans le premier réseau et ne formant pas un second réseau.

Le terme « polymère » au sens de présente invention désigne une macromolécule constituée de chaînes linéaires ou ramifiées et dont la structure résulte essentiellement de la répétition d'unités constitutives dérivées de monomères.

Le terme « copolymère » au sens de présente invention désigne un polymère dont les unités constitutives sont dérivées de plus d'une sorte de monomère.

On entend par « réseau de polymère » au sens de la présente invention, un réseau constitué de un ou de plusieurs polymères (ou copolymères) réticulés, c'est-à-dire de un ou plusieurs polymères dont les chaînes sont reliées entre elles par des liaisons covalentes.

Dans le cadre de l'invention, un « polymère conducteur électronique » est un polymère présentant des liaisons délocalisées, notamment un polymère π-conjugué. Parmi les polymères conducteurs électroniques utilisables, on peut citer par exemple les polypyrroles, les polyparaphénylènes, les polythiophènes, les polyanilines, les polycarbazoles, les polyacétylènes, ces différents polymères étant éventuellement substitués, par exemple par des groupements non polaires (chaîne aliphatique, groupement alcoxy, substituant à base de fluor, etc.) ou polaires (chaîne aliphatique terminée par une fonction sulfonate ou carboxylate, etc.)

On entend par « polymère conducteur ionique » au sens de la présente invention un polymère pouvant être facilement complexé par des sels organiques et inorganiques et présentant éventuellement des groupements polaires, par exemples des groupements éthers, amines, alcools, etc.

On entend par « branche pendante » au sens de la présente invention une chaîne de polymère reliée au réseau de polymère par un seul point.

Dans le cadre de la présente invention, les termes « polyéthylène glycol » (PEG) ou « polyoxyde d'éthylène » (POE) sont indifféremment utilisés pour désigner des polymères d'oxyde d'éthylène de masses moléculaires de 300 g/mol à 10000000 g/mol.

On entend par « alkyle » au sens de la présente invention, un radical carboné linéaire, ramifié ou cyclique, éventuellement substitué et/ou insaturés, comprenant 1 à 18 atomes de carbone, par exemple 1 à 6 atomes de carbone, par exemple 1 à 4 atomes de carbone. On peut citer par exemple les groupements méthyle, éthyle, propyle, butyle, isobutyle, tertiobutyle, cyclohexyle, etc.

On entend par « hétéroalkyle » au sens de la présente invention, un radical alkyle tel que défini précédemment, ledit système alkyle comprenant au moins un hétéroatome, notamment choisi dans le groupe comprenant le soufre, l'oxygène, l'azote, le bore. On peut citer par exemple les groupements alkoxy, éther, etc.

On entend par « aryle » au sens de la présente invention, un système aromatique comprenant au moins un cycle satisfaisant la règle d'aromaticité de Hückel. Ledit aryle est éventuellement substitué et peut comprendre de 6 à 22 atomes de carbone, par exemple 6 à 10 atomes de carbone. On peut citer par exemple les groupements phényle, naphtyle, indolyle, anthracyle, etc.

On entend par « hétéroaryle » au sens de la présente invention, un système comprenant au moins un cycle aromatique de au moins 5 chaînons parmi lesquels au moins un chaînon du cycle aromatique est relié à un hétéroatome, notamment choisi dans le groupe comprenant le soufre, l'oxygène, l'azote, le bore. Ledit hétéroaryle est éventuellement substitué et peut comprendre de 1 à 22 atomes de carbone, de préférence 1 à 10 atomes de carbone. On peut citer par exemple les groupements pyridyle, pyrimidyle, thiényle, furahnyle, pyrrolyle, furyle, quinolyle, indolyle, pyrazinyle, etc.

Le terme « substitué » désigne par exemple le remplacement d'un atome d'hydrogène dans une structure donnée par un radical choisi dans le groupe comprenant un alkyle, hétéroalkyle, aryle, hétéroaryle, un groupement polaire, un halogène, un alkyle halogéné, etc. Lorsque plus d'une position peut être substituée, les substituants peuvent être les mêmes ou différents à chaque position.

Le terme « groupements polaires » désigne par exemple les groupements ester, éther, amine, alcool, -CN, -COOH, -OH, -NH₂, -SO₃H, etc.

L'expression « température ambiante » au sens de la présente invention peut être une température allant de 15 à 30°C, de préférence de 20 à 25 °C.

Dans le cadre de l'invention, le terme « gonflement » peut être défini comme suit. Quand un réseau d'un polymere (polymere réticulé ou réseau simple) ou un RIP (mélange d'au moins deux reseaux) sont mis en contact d'un liquide, ils sont inaptes à se dissoudre par nature (le solvant ne peut pas casser les liaisons et intéractions pour conduire à une dissolution). Par contre, il peut pénétrer plus ou moins dans le materiau provoquant un effet mécanique de gonflement.

Dans le matériau de l'invention, le réseau de polymère (ou le RIP) A peut présenter des groupements chimiques polaires choisis dans le groupe comprenant -CN, -COOCH₃, -COOH, -OH, -NH₂ et les groupements éther. La présence des groupements chimiques polaires permet la pénétration d'un électrolyte dans le réseau de polymère (ou le RIP) A.

En particulier, le réseau de polymère (ou le RIP) A peut être choisi dans le groupe comprenant le polyoxyde d'éthylène (POE), le caoutchouc nitrile butadiène (NBR), le poly-tétrahydrofuranne (PTHF), le polycarbonate, les dérivés de la cellulose, les poly(méth)acrylates d'alkyle en C₁ à C₄, ou un mélange de ceux-ci formant un réseau interpénétré de (co)polymères. Les dérivés de la cellulose peuvent être, par exemple, le méthyle cellulose ou l'acétobutyrate de cellulose. Parmi les poly(méth)acrylates d'alkyle, on peut citer plus particulièrement le polyméthacrylate de méthyle (PMMA).

L'utilisation d'autres polymères dans la constitution des matériaux de la présente invention permet d'améliorer encore la flexibilité et la stabilité des semi-RIPs. Dans un mode de réalisation de l'invention, dans le matériaux de l'invention, le POE est partiellement voire totalement remplacé par un dérivé du caoutchouc ou un élastomère , par exemple, le caoutchouc nitrile butadiène (NBR). Ce type de polymère peut présenter des propriétés mécaniques nettement supérieures à celles du POE et une stabilité bien plus grande pour une température supérieure à l'ambiante. Ainsi, des dispositifs monoblocs électro-émissifs dans l'infrarouge comprenant ce type de matériau, , peuvent présenter des performances très compétitives par rapport aux systèmes concurrents à base de matériaux organiques et/ou inorganiques

Le réseau de polymère (ou le RIP) A peut être densifié en groupements chimiques polaires par ramification des réseaux. La densification en groupements chimiques polaires par ramification des réseaux permet une meilleure pénétration d'un électrolyte dans le réseau de polymère (ou le RIP) A. Par exemple, le réseau de polymère (ou le RIP) A peut comprendre un taux de ramification par motif de 1 à 99% en nombre de monomère constituant la branche pendante, de préférence de 35 à 83% en nombre.

Selon un mode de réalisation de l'invention, le réseau de polymère (ou le RIP) A est le polyoxyde d'éthylène (POE) ayant une teneur en branches pendantes de 50% en masse par rapport à la masse totale de POE.

Dans le matériau selon l'invention, la couche de réseau de polymère (ou le RIP) A peut avoir une épaisseur comprise entre 10 et 500 micromètres.

Comme déjà indiqué, dans le matériau selon l'invention, B est un polymère conducteur électronique (PCE). La teneur en polymère B confère au matériau de la présente invention des propriétés optiques améliorées. La teneur en polymère B est de 0,5 à 2,5 %, par exemple de 0,8 à 2 %, par exemple de 0,8 à 1,6, par exemple de 0,9 à 1,2, en masse par rapport au poids total du matériau. La teneur en polymère B est avantageusement de 0,8 à 2 %, en masse par rapport au poids total du matériau.

Le polymère B est choisi dans le groupe comprenant le poly(3,4-éthylènedioxythiophène) (PEDOT), ou le poly(3,4-propylènedioxythiophène), ou l'un de ces polymères substitué par une chaîne aliphatique, alcoxy en C₁ à C₁₈ ou encore un groupement polaire tel que carboxylate (-R-COOX), sulfonate (-RSO₃X), alcoolate (-R-OX). R peut être choisi dans le groupe comprenant les alkyles, hétéroalkyles, aryles, hétéroaryles, et X peut être choisi dans le groupe comprenant un hydrogène, un cation alcalin comme par exemple Li+, Na+, K+, etc. Le polymère B est avantageusement le poly(3,4-éthylènedioxythiophène) (PEDOT).

Dans le matériau de l'invention de structure symétrique B-A-B, le polymère B est interpénétré dans la couche de réseau de polymère (ou le RIP) A de telle sorte que la teneur en B décroît de la surface externe du matériau B-A-B vers le centre du matériau où seul A est présent. Par exemple, le polymère B peut être interpénétré dans la couche de réseau de polymère (ou le RIP) A sur une épaisseur de 0,5 à 30% par rapport à l'épaisseur de la couche de réseau de polymère (ou le RIP) A.

La présente invention concerne également un procédé de préparation d'un matériau selon l'invention comprenant les étapes successives suivantes :
(i) la formation d'une couche de réseau de polymère A imprégnée de monomère M_{B} précurseur du polymère B ; dans lequel le monomère M_{B} est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate ;
(ii) la polymérisation oxydative du monomère M_{B} en polymère B par mise en contact de la couche de réseau de polymère A imprégnée de monomère M_{B} avec un oxydant formant un matériau selon l'invention.

Le monomère M_{B} est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate. Le monomère M_{B} est, plus particulièrement, le (3,4-éthylènedioxythiophène (EDOT)).

Au cours de l'étape (i) du procédé, la formation de la couche de réseau de polymère A imprégnée de monomère M_{B} peut comprendre une étape de réticulation d'un précurseur en polymère A, ce précurseur pouvant être un polymère réticulable, éventuellement en présence du monomère M_{B}. Au cours de cette étape :
- le précurseur peut être choisi dans le groupe comprenant le caoutchouc nitrile butadiène (NBR), la méthylcellulose et l'acétobutyrate de cellulose ; et/ou
- la réticulation du précurseur en polymère A peut être réalisée par réaction avec un composé chimique choisi dans le groupe comprenant le soufre, les peroxydes, les pluri-isocyanates et les aldéhydes.

Au cours de l'étape (i), la formation de la couche de réseau de polymère (ou de RIP) A imprégnée de monomère M_{B} peut comprendre une étape de polymérisation d'un monomère ou d'un mélange de monomères M_{A} précurseur(s) du polymère (ou du RIP) A, éventuellement en présence du monomère M_{B}. La formation de la couche de réseau de polymère (ou du RIP) A imprégnée de monomère M_{B} peut comprendre, en outre, une étape d'imprégnation de la couche de réseau de polymère A par le monomère M_{B}.

Au cours de l'étape (i) du procédé de l'invention la polymérisation peut être une polymérisation radicalaire. La polymérisation radicalaire peut être réalisée suivant l'une ou plusieurs des conditions suivantes :
- le monomère ou le mélange de monomères M_{A} est choisi dans le groupe comprenant le poly(éthylène glycol)méthacrylate (PEGM), le poly(éthylène glycol)diméthacrylate (PEGDM), le polyméthacrylate de méthyle, le polyacrylonitrile ou un mélange de ceux-ci;
- le monomère ou le mélange de monomères M_{A} est sous la forme d'un mélange de deux monomères M_{A1} et M_{A2};
- le monomère ou le mélange de monomères M_{A} est sous la forme d'un mélange équimolaire de deux monomères M_{A1} et M_{A2} ;
- les monomères M_{A1} et M_{A2} sont respectivement le polyéthylène glycol)méthacrylate (PEGM) et le poly(éthylène glycol)diméthacrylate (PEGDM) ;
- le monomère M_{B} est présent initialement à la concentration de 1 à 20% en masse totale de monomère ou du mélange de monomères M_{A}, de préférence à la concentration de 5% ;
- la polymérisation radicalaire est réalisée en présence d'un amorceur radicalaire ;
- l'amorceur radicalaire est choisi dans le groupe comprenant les composés azobis de formule R-N=N-R' et les composés peroxydes de formule R-O-O-R', R et R', identiques ou différents, étant choisis dans le groupe comprenant les alkyles, hétéroalkyles, aryles, hétéroaryles, éventuellement substitués par des groupements -CO, - CN, -NH₂, -NH ;
- l'amorceur radicalaire est présent initialement à la concentration de 1 à 5 % en masse totale de monomère ou du mélange de monomères M_{A}.

L'amorceur radicalaire peut être par exemple choisi dans le groupe comprenant le 2,2' azobis-isobutyronitrile (AIBN), l'hydrochloride de 2,2'-azobis(2-amidinopropane) (AAPH), le 2,2'-azobis (2,4-diméthylvaléronitrile) (AMVN), le péroxycarbonate dicyclohexyle (PCDH), le péroxyde de benzoyle.

L'étape (i) peut être réalisée suivant l'une ou plusieurs des conditions suivantes :
- par traitement thermique ou par photopolymérisation
- à une température de 40 à 100°C, de préférence de 50 à 80°C ;
- pendant une durée de 2 à 10 h, de préférence de 4 à 6h.

Dans le procédé selon l'invention, l'étape (ii) peut être réalisée suivant l'une ou plusieurs des conditions suivantes :
- l'oxydant est choisi dans le groupe comprenant le FeCl₃, le tosylate ferrique ; le sulfate ferrique ou le nitrate de cérium et d'ammonium ;
- la mise en contact est réalisée par immersion de la couche du réseau de polymère A imprégnée de monomère M_{B} dans une solution comprenant l'oxydant ;
- la solution comprenant l'oxydant a une concentration en oxydant de 0,1 à 2 mole/litre
- la solution comprenant l'oxydant comprend un solvant choisi parmi l'eau, le chloroforme, le dichlorométhane, l'acétonitrile, les alcools en C₁ à C₄ ou un mélange de ceux-ci, la N-méthylpyrrolidonne, le diméthylsulfoxyde ;
- la mise en contact est réalisée à une température de -10 à 80°C ;
- la mise en contact est réalisée pendant une durée de 10 minutes à 24h.

Dans un mode de réalisation particulier de l'invention, lorsque le monomère M_{B} est le (3,4-éthylènedioxythiophène (EDOT), pour une concentration d'EDOT dans le mélange initial de 5% en masse totale de monomère M_{A}, la mise en contact est réalisée par exemple par immersion dans une solution d'oxydant de concentration 1M, par exemple aux conditions de températures et de durées suivantes : 50°C +/- 2°C pendant 60min +/- 1 min, 25°C +/- 2°C pendant 24h +/- 1 h ou encore 35°C +/- 2°C pendant 5h +/- 1h.

Dans une première variante de l'invention, le matériau de l'invention peut également être préparé par un procédé de synthèse électrochimique dans lequel le monomère M_{B} précurseur du polymère B est électropolymérisé dans le réseau de polymère (ou du RIP) A. Dans ce cas, le procédé de préparation d'un matériau selon l'invention peut comprendre les étapes successives suivantes :
(i) le gonflement du réseau de polymère (ou de RIP) A dans un milieu électrolytique contenant le monomère M_{B} précurseur du polymère B ; dans lequel le monomère M_{B} est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate,
(ii) la polymérisation oxydative du monomère M_{B} en polymère B par électropolymérisation du monomère M_{B} au contact de la face 1 de la couche de réseau de polymère (ou du RIP) A imprégnée d'électrolyte et de monomère M_{B} ;
(iii) le gonflement du réseau de polymère (ou du RIP) A dans un milieu électrolytique contenant le monomère M_{B} précurseur du polymère B ;
(iv) l'électropolymérisation du monomère M_{B} en polymère B au contact de la face 2 de la couche de réseau de polymère (ou du RIP) A imprégnées d'électrolyte et de monomère M_{B} formant un matériau selon l'invention.

Une étape de lavage peut éventuellement être effectuée à l'issue des étapes (ii) et/ou (iv).

La synthèse électrochimique de semi-RIP pyrrole/poly(vinyl alcool) a déjà été décrite [2].

Les étapes (i), (ii), (iii) et (iv), peuvent être réalisées suivant l'une ou les deux conditions suivantes :
- L'électrolyte est constitué d'un solvant choisi parmi l'acétonitrile, le carbonate de propylène, l'eau, le dichlorométhane et d'un électrolyte de concentration 0,1 à 1 mole/litre choisi parmi les sels associant un cation lithium, sodium, potassium ou tétraalkylammonium et un anion perchlorate, hexafluorophosphate, tétra fluoroborate. L'électrolyte peut également être un liquide ionique ayant une température de fusion inférieure à 0°C.
- Le milieu électrolytique est constitué d'un solvant dans lequel est dissout un sel et le monomère M_{B} a une concentration en monomère de 0,1 à 1 mole/litre.

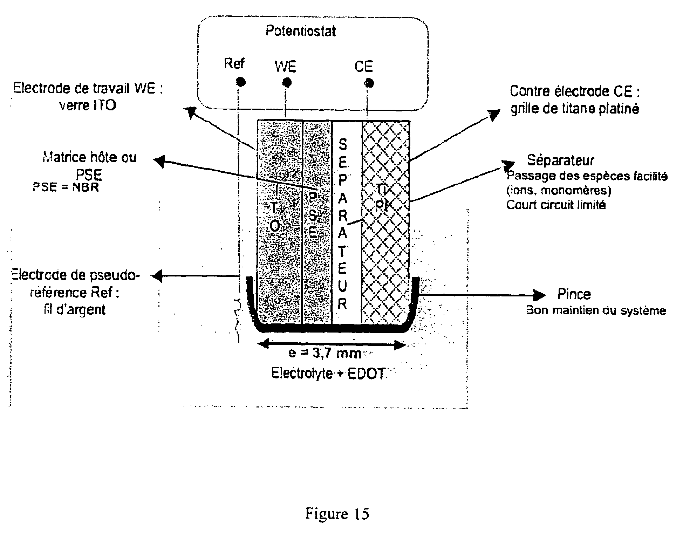

Les étapes (ii) et (v) du procédé peuvent être réalisées dans une cellule électrochimique selon l'une ou plusieurs des conditions suivantes : La cellule électrochimique (figure 15), d'épaisseur comprise entre 2 et 6 mm, utilise un montage classique à trois électrodes.
- La cellule est constituée d'une électrode de travail choisie parmi un verre d'ITO (Indium Tin Oxide), une plaque de platine, une plaque d'acier inox, d'une contre électrode choisie parmi une grille de titane platinée, une grille ou un tissu d'acier inox (ou d'un autre métal ou alliage métallique, de préférence inaltérable) afin de permettre aux espèces présentes dans le milieu d'accéder facilement au site réactionnel et d'une électrode de référence tel qu'un fil d'argent.
- La couche de réseau de polymère (ou de RIP) A imprégnées d'électrolyte et de monomère M_{B} est disposée entre l'électrode de travail et la contre électrode.
- Une membrane séparatrice est intercalée entre la couche de réseau de polymères A imprégnées d'électrolyte et de monomère M_{B} et la contre électrode afin d'éviter tout court-circuit entre les électrodes et pour une meilleure circulation des espèces électrolytiques.
- La membrane séparatrice est choisie parmi le papier filtre, le PVC.
- L'ensemble de la cellule est maintenu par une pince.
- La mise en contact est réalisée à une température de -10°C à 80°C.
- La mise en contact est réalisée pendant une durée de 30 minutes à 24 heures.

Les étapes (ii) et (iv) peuvent être réalisées à potentiel contrôlé ou mode potentiostatique avec un potentiel pouvant varier de 1,0V à 1,4V.

Le solvant est choisi parmi le méthanol, l'acétonitrile, le carbonate de propylène, le dichlorométhane, la N-méthylpyrrolidone, le diméthylsulfoxyde, le tétrahydrofuranne.

Dans une deuxième variante de l'invention, le matériau de l'invention peut être préparé par un procédé comprenant les étapes successives suivantes :
(i) le gonflement du réseau de polymère (ou du RIP) A dans un milieu électrolytique contenant le monomère M_{B} précurseur du polymère B ; dans lequel le monomère M_{B} est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate
(ii) la polymérisation oxydative du monomère M_{B} en polymère B par électropolymérisation du monomère M_{B} au contact de la face 1 de la couche de réseau de polymères A imprégnées d'électrolyte et de monomère M_{B} ;
(iii) le gonflement du réseau de polymères A dans une solution de monomère M_{B} précurseur du polymère B ;
(iv) la polymérisation oxydative du monomère M_{B} en polymère B par mise en contact de la face 2 de la couche de réseau de polymères A imprégnées d'électrolyte et de monomère M_{B} avec un oxydant formant un matériau selon l'invention.

Une étape de lavage peut éventuellement être effectuée à l'issue des étapes (ii) et/ou (iv).

Dans cette variante, l'étape (iv) peut être réalisée suivant l'une ou plusieurs des conditions suivantes :
- L'oxydant est choisi dans le groupe comprenant le chlorure ferrique, le tosylate ferrique, le sulfate ferrique ou le nitrate de cérium et d'ammonium.
- La mise en contact est réalisée par immersion de la face 2 de la couche du réseau de polymères A imprégnée de monomère M_{B} dans une solution d'oxydant.
- La mise en contact est réalisée en protégeant la face 1 de la couche du réseau de polymères A de l'oxydant à l'aide d'un film protecteur choisi parmi un film de téflon, du verre, du papier filtre.
- La solution comprenant l'oxydant a une concentration en oxydant de 0,1 à 2 mole/litre.
- La solution comprenant l'oxydant comprend un solvant choisi parmi l'eau, le chloroforme, le dichlorométhane, l'acétonitrile.
- La mise en contact est réalisée à une température de -10°C à 80°C
- a mise en contact est réalisée pendant une durée de 30 minutes à 24 heures.

Selon une troisième variante de l'invention, le matériau de l'invention peut être préparé par un procédé comprenant les étapes successives suivantes :
(i) le gonflement d'un premier réseau de polymère (ou de RIP) A dans un milieu électrolytique contenant le monomère M_{B} précurseur du polymère B dans lequel le monomère M_{B} est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate
(ii) la polymérisation oxydative du monomère M_{B} en polymère B par électropolymérisation du monomère M_{B} au contact de la face 1 de la couche de réseau de polymères A imprégnées d'électrolyte et de monomère M_{B} pour conduire au matériau 1 ;
(iii) le gonflement d'un second réseau de polymère (ou de RIP) A dans un milieu électrolytique contenant le monomère M_{B} précurseur du polymère B ;
(iv) la polymérisation oxydative du monomère M_{B} en polymère B par électropolymérisation du monomère M_{B} au contact de la face 1 de la couche de réseau de polymère (ou du RIP) A imprégnées d'électrolyte et de monomère M_{B} pour conduire au matériau 2 ;
(v) l'assemblage des matériaux 1 et 2 sous presse formant un matériau selon l'invention.

Une étape de lavage peut éventuellement être effectuée à l'issue des étapes (ii) et/ou (iv).

L'assemblage sous presse dans l'étape (v) peut être réalisée dans l'une ou plusieurs des conditions suivantes :
- L'assemblage sous presse est réalisée sous une pression de 2 tonnes.
- L'assemblage sous presse est réalisée à une température comprise entre 150°C et 185°C.
- L'assemblage sous presse est réalisée pendant une durée de 5 minutes à 30 minutes.

Ces variantes de procédé mettant en oeuvre au moins une étape d'électropolymérisation, présentent plusieurs avantages. Elles peuvent par exemple permettre :
- l'obtention un matériau plus homogène (absence de réactifs de polymérisation)
- le contrôle de la quantité, la qualité et la répartition du polymère conducteur dans la matrice hôte (réseau de polymère (ou RIP) A)
- le contrôle de la nature du contre ion (dopant)
- l'amélioration des propriétés électriques du matériau.

La présente invention concerne également un dispositif électro-émissif (DEE) comprenant un matériau selon l'invention. Le dispositif de l'invention présente l'avantage de ne pas nécessiter de couche d'or pour fonctionner. Avec les systèmes multicouches de l'etat de l'art, les dispositifs utilisant des polymères conducteurs électroniques (PCE) necessitent :
i) une couche de verre conducteur (verre ITO en general) qui joue le rôle de collecteur de courant, et
ii) une fine couche d'or reflective sans laquelle le système fontionne mal ou pas du tout.
Dans la présente invention, le matériau joue à la fois le rôle de collecteur de courant et de couche réflectrice avec une réflectivité modulable.

Le dispositif renferme, en outre, un électrolyte. L'électrolyte peut être par exemple un électrolyte liquide associant un solvant organique et un sel soluble dans ce solvant ou un liquide ionique ayant une température de fusion inférieure à 0°C.

L'électrolyte peut être présent à une concentration comprise entre 20 et 150% en masse par rapport au poids total du matériau.

L'électrolyte peut être choisi parmi les sels organiques ou les sels inorganiques. L'électrolyte peut par exemple être choisi parmi les sels d'imidazolium, de pyrrolidium, d'ammonium quaternaire, de phosphonium, les sels de lithium, de sodium, dans un solvant. L'électrolyte peut également être choisi par exemple parmi les sels d'imidazolium, de pyrrolidium, d'ammonium quaternaire, de phosphonium, utilisés sans solvant, du fait de leur caractère de liquide ionique à une température inférieure à 0°C.

Selon un mode de réalisation particulier de l'invention, le dispositif est gonflé à saturation en électrolyte. Ceci présente l'avantage de diminuer le temps de réponse de l'électrolyte.

L'invention concerne encore l'utilisation du matériau selon l'invention dans l'une des applications suivantes :
- comme matériau de furtivité ; et/ou
- comme matériau pour améliorer l'isolation thermique, par exemple dans le bâtiment, et/ou
- comme matériau pour le remplacement des volets vénitiens des panneaux des satellites artificiels, et/ou
- comme matériau pour contrôler la température suivant l'exposition solaire.ou la température extérieure.

### Brève description des figures

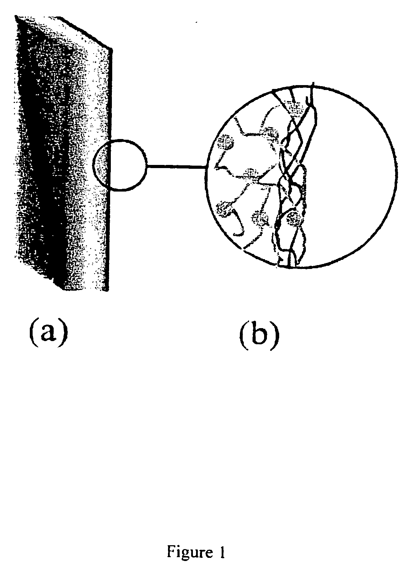

- La figure 1 représente schématiquement la structure interpénétrée du polymère B dans un réseau de polymère A à l'intérieur d'un dispositif monobloc électroémissif dans l'infrarouge. La surface est principalement constituée de PEDOT, alors que le coeur du matériau n'est constitué que par le PSE. (b) Vue schématique de la surface des matériaux. Le PEDOT (en noir) est interpénétré dans les mailles du réseau POE 3D (en gris).
   La figure 1 (a) correspond à une représentation schématique des dispositifs développés par les inventeurs. Ces dispositifs se composent d'une part d'un polymère support d'électrolyte (PSE) à base d'un réseau 3D de poly(oxyde d'éthylène) (POE). Ce PSE se présente sous la forme d'un film mince flexible, dont les constituants sont suffisamment polaires pour que le PSE soit gonflé par un électrolyte. Un polymère conducteur électronique (PCE), le poly(3,4(éthylène dioxythiophène) (PEDOT), est interpénétré dans la surface des deux faces du PSE, comme représenté schématiquement sur la figure 1(b). Le PCE joue à la fois le rôle de couche à émissivité variable (ou couche active) et de collecteur de courant. Le matériau final présente bien tous les composants nécessaires d'un dispositif électro-émissif.

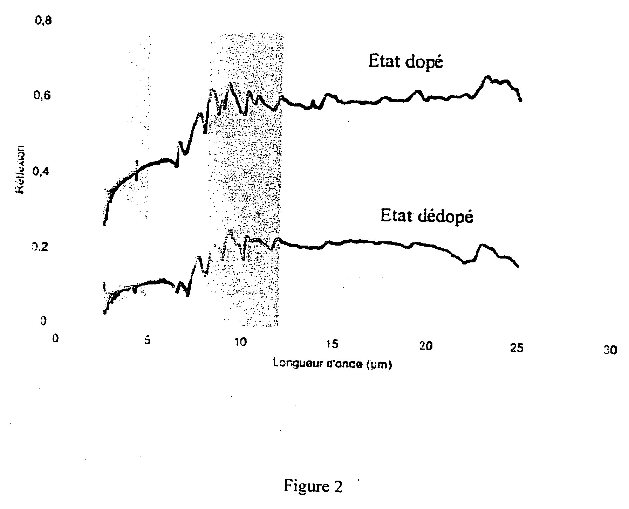

- La figure 2 représente les spectres en réflexion des dispositifs monoblocs électro-émissifs dans l'infrarouge en fonction de l'état de dopage de la couche active. La longueur d'onde, exprimée en µm, est représentée en abscisse et la réflexion en ordonnée.
   La figure 2 représente les spectres « extrêmes » en réflexion de la couche active d'un prototype développé. Pour ces mesures, le matériau a été soumis à une différence de potentiel de ±1,2V. Appliquer 1,2V aux bornes du système revient à oxyder le PEDOT de la couche active, et donc à la rendre plus réflectrice. A l'inverse, appliquer -1,2V revient à réduire la couche active, c'est-à-dire à la rendre absorbante dans l'infrarouge. La courbe du dessous, « Etat dédopé », correspond à l'état réduit, et la courbe du dessus, « Etat dopé », représente l'état oxydé. Ces courbes permettent de déterminer le contraste (différence de la réflexion entre la courbe « Etat dopé » et la courbe « Etat dédopé »), et le facteur de modulation (rapport entre la courbe « Etat dopé » et la courbe « Etat dénoirdopé »). Le contraste et le facteur de modulation sont respectivement de 30% et 4,3 en bande Il (représentée à 3-5µm représentée sur la figure 2) et 40% et 2,8 en bande III (représentée à 8-12µm sur la figure 2). Ces valeurs sont équivalentes à celles désirées pour les applications convenues, en particulier en bande III.

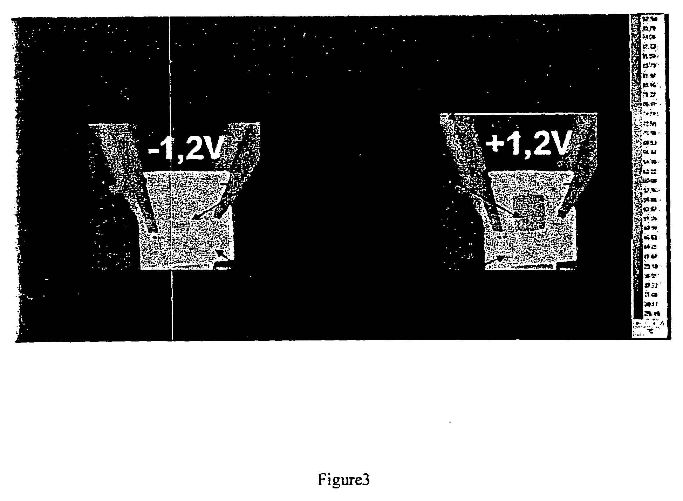

- La figure 3 représente des photographies extraites d'une vidéo filmée en bande III d'un prototype de dispositifs monoblocs électro-émissifs. Le changement de couleur du matériau correspond à une variation de la réflexion de 30%.
   Des vidéos à l'aide de caméra infrarouge enregistrant les données en bande III ont été effectuées sur le dispositif. Les photos des états extrêmes sont reportées sur la figure 3. Le matériau à partir duquel la vidéo a été prise présentait un contraste de 30.
   La variation de couleur (du gris clair au gris foncé) correspond à une modification de 25°C de la température apparente, la température réelle étant de l'ordre de 60°C.
   Le temps de réponse (durée nécessaire au dispositif pour passer d'un état optique extrême à l'autre) est une propriété qui dépend de plusieurs facteurs, en particulier de la température. Un couplage spectro-électrochimique a permis de mesurer un temps de réponse qui est de l'ordre de la minute à 25 °C environ. La vidéo, dont les images ont été extraites en figure 3, a été filmée à 60°C. Le temps de réponse à cette température est d'une dizaine de secondes. La vitesse de changement d'état, autrement dit la « vitesse de camouflage » est un facteur crucial, et les semi-RIPs conçus présentent une bonne rapidité d'exécution.

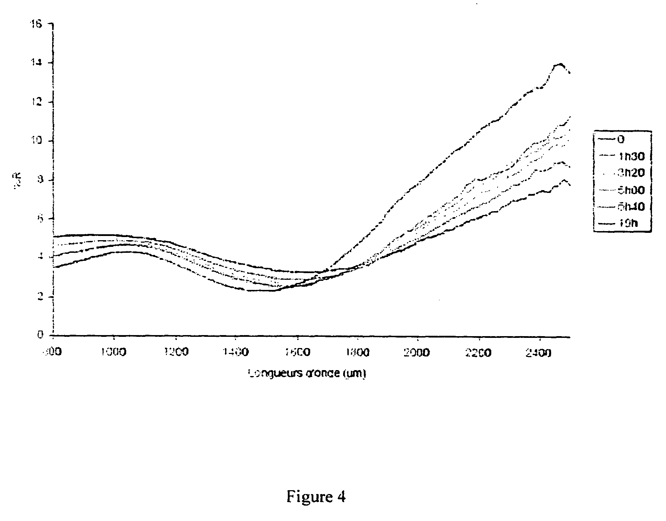

- La figure 4 représente l'évolution des spectres en réflexion dans le Proche Infrarouge de la surface active des dispositifs monoblocs électro-émissifs en circuit ouvert. La longueur d'onde, exprimée en µm, est représentée en abscisse et le pourcentage de réflexion en ordonnée. L'effet mémoire est la capacité du dispositif à rester dans un état optique lorsque le circuit électrique est ouvert. Les spectres en réflexion de l'état réduit sont reportés sur la figure 4 et ont été mesurés en fonction du temps. Seule l'évolution du %R de l'état réduit est reportée ici. En effet, il s'agit de l'état le moins stable, ce qui constitue le facteur limitant de la stabilité des dispositifs. Au bout de 5 heures, le pouvoir réflecteur a augmenté de 3%. Après 19 heures, le %R a varié de 7%. Le système présente donc une bonne stabilité optique, et les apports en énergie afin que le système reste dans un état optique sont donc très limités.

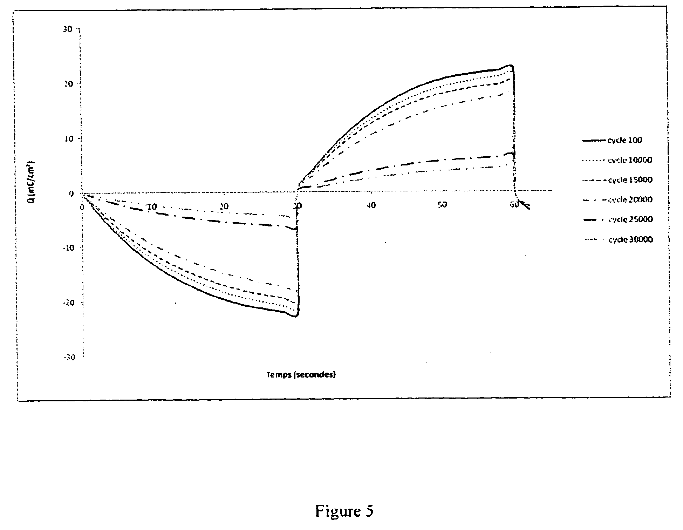

- La figure 5 représente la densité de charge des dispositifs monoblocs électro-émissifs lors d'un changement d'état de réflexion. Les courbes extrêmes représentent respectivement le 100ième et le 30000^{ième} cycle.
   Une caractérisation, menée sur les dispositifs monoblocs électro-émissifs dans l'infrarouge, est la détermination de leur cyclabilité. Cette dernière représente le nombre de changements d'états optiques consécutifs que le matériau peut subir avant de présenter une diminution de ses performances. La figure 5 représente l'évolution de la densité de charge d'un RIP soumis à des cycles de ±1,2V d'une durée de 1 minute. Pendant 30 secondes, une tension de 1,2V est appliquée au matériau. Au bout de ce délai, la tension est inversée pendant à nouveau 30 secondes, et ainsi de suite. Cette mesure a été effectuée à température et sous atmosphère ambiante. Entre la courbe représentant le 100^{ième} cycle, et celle représentant le 10000ième cycle, la perte de la densité de charge est très faible et de l'ordre de 0,2%. Les systèmes fonctionnent donc toujours très bien après avoir cyclé 10000 fois à température ambiante. La même caractérisation a été menée à des températures plus élevées, jusque 100°C. A ces températures, la stabilité est diminuée. Ce résultat n'a cependant rien de surprenant : nous avions démontré lors d'un précédent travail qu'à ces températures, le PSE engendrait des espèces qui dégradaient le PCE.

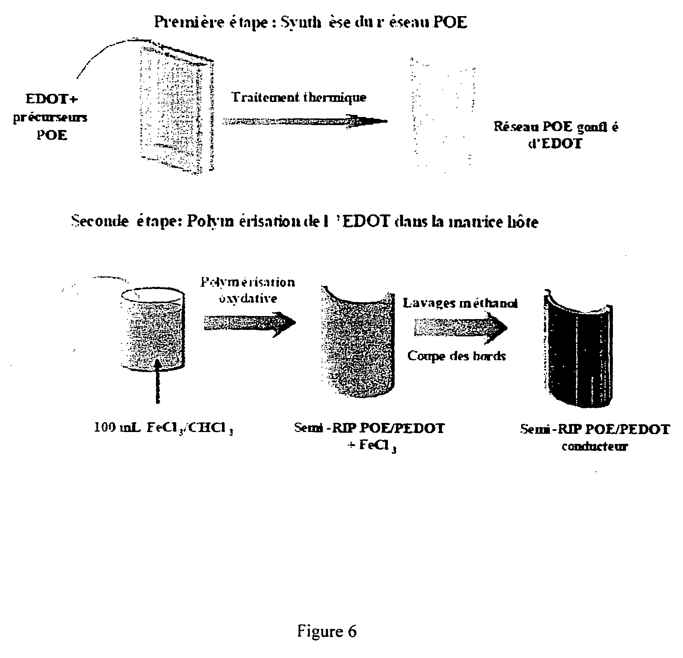

- La figure 6 représente un schéma récapitulatif de la synthèse des semi-RIPs POE/PEDOT.
- La figure 7 représente schématiquement la formation d'un réseau POE à branches pendantes.
- La figure 8 représente schématiquement le support de mesure utilisé pour caractériser les propriétés en réflexion dans l'infrarouge des semi-RIPs.

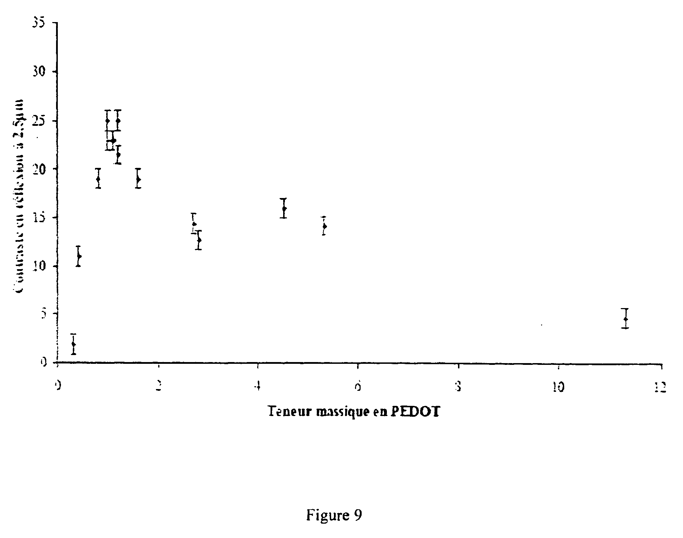

- La figure 9 représente l'évolution du contraste en réflexion à 2,5µm de semi-RIP POE/PEDOT en fonction de la teneur en PEDOT. La teneur massique en PEDOT est représentée en abscisse et le contraste en réflexion à 2,5µm de semi-RIP POE/PEDOT en ordonnée.
- La figure 10 représente en (a) la spectro-électrochimie dans le PIR d'un semi-RIP POE/PEDOT pour ÄE variant entre [-1,2V ; 1,2V] et en (b) la représentation en 3D des mêmes spectres. La longueur d'onde, exprimée en nm, est représentée en abscisse et le contraste en réflexion à 2,5µm de semi-RIP POE/PEDOT en ordonnée.
- La figure 11 représente les spectres en réflexion d'un semi-RIP. Les zones grisées représentent les bandes II (3-5 µm) et bandes III (8-12 µm). Les spectres entre 0,8µm et 2,5 µm sont mesurés à l'aide d'un Jasco V570. Au-delà de 2,5µm, les mesures sont réalisées à l'aide d'un SOC100.
- La figure 12 représente l'évolution du temps de réponse en fonction de la teneur en électrolyte pour la transition réflecteur/absorbant (a) et la transition absorbant/réflecteur (b). Le taux de gonflement, exprimé en masse (%w), est représenté en abscisse et le temps de réponse à 90% du contraste, exprimé en secondes, en ordonnée.
- La figure 13 représente l'évolution du temps de réponse pour la transition absorbant/réflecteur en fonction de la température de fonctionnement du DEEdont le taux de gonflement en EMImTFSI est de 20% en masse. La température réelle, exprimée en °C, est représentée en abscisse et le temps de réponse à 90% du contraste, exprimé en secondes, en ordonnée.
- La figure 14 (a) représente les spectres en réflexion dans l'IR d'un DEE au cours du temps en circuit ouvert. La longueur d'onde, exprimé en µm, est indiquée en abscisse et le pourcentage de réflexion en ordonnée.
- La figure 15 représente le montage d'une cellule d'électropolymérisation.

### EXEMPLES

### Produits utilisés

- Poly(éthylène glycol) diméthacrylate (PEGDM) 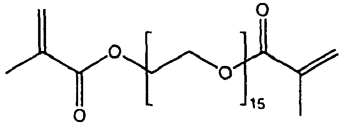 (Aldrich). • Poly(éthylène glycol) méthacrylate méthyl ether (PEGM) 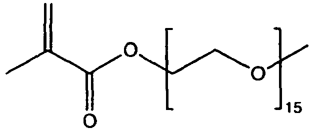 (Aldrich).
- 3,4-éthylènedioxythiophène (EDOT), (Bayer), N-méthylimidazole, 99+%, (Aldrich)
- Bromoéthane, 98%, (Aldrich)
- Bis(trifluorométhylsulfonyl)imide de lithium, LiTFSI, 99,95%, (Aldrich)
- 1,1,1-trichloroéthane, 99+% (Aldrich)
- Chlorure ferrique FeCl₃ anhydre (Acros)
- Perchlorate de lithium, LiClO₄, (Aldrich)
- Méthanol (Carlo Erba)
- Carbonate de propylène, anhydre, 99,7% (Aldrich)
- Toluène (Carlo Erba)
- Chloroforme (VWR)
- Acide téréphtalique (Aldrich)
- 4- tert butyl catechol (Aldrich)
- 2,2' azobis-isobutyronitrile (Aldrich)
- Péroxyde d'hydrogène 35% en masse (Aldrich)

Les mesures en réflectivité ont été effectués dans le proche IR (0,8 à 2,5 micromètre)avec un spectrophotométre JASCO V 570 équipé d'une sphère d'intégration. Dans le moyen IR (2,5 à 25 micromètrem), l'appareil utilisé était un spectrophotomètre Nicolet Magnard équipé de l'extension SOC 100.

### Exemple 1 : Synthèse du matériau

Cette partie est consacrée à l'étude de la préparation des Réseaux semi-Interpénétrés de Polymères (ou semi-RIPs) à base de poly(oxyde d'éthylène) (ou POE) et de poly(3,4-éthylène dioxythiophène) (ou PEPOT). Ces matériaux sont désignés sous le terme de semi-RIP POE/PEDOT, ou simplement semi-RIP. La synthèse de films minces de semi-RIPs conducteurs présentant des propriétés d'électro-émissivité est effectuée en deux étapes principales telles que décrites ci-dessous.

**1.1.** La première étape de la synthèse est l'élaboration d'un réseau à base de poly(oxyde d'éthylène) (POE) contenant le monomère 3,4-éthylènedioxythiophène (EDOT) utilisé comme solvant et qui conduira au PEDOT. La matrice hôte (ou réseau POE) est composée d'un réseau tridimensionnel dans lequel sont présentes des chaînes pendantes. Ces dernières apportent un effet plastifiant au système et favorisent la mobilité des espèces ioniques. C'est suite aux analyses faites par DMA et aux mesures de conductivités ioniques qu'il a été décidé d'utiliser des matériaux dont la teneur en branches pendantes est de 50% en masse par rapport à la masse totale de POE. En effet il s'agit là du meilleur compromis entre la conductivité ionique et la tenue mécanique du matériau.

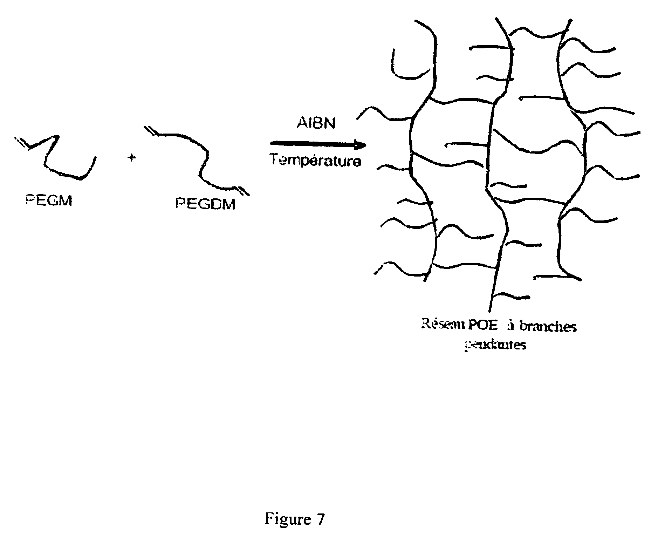

La copolymérisation du PEGM et du PEGDM est effectuée en présence d'un amorceur radicalaire : le 2,2' azobis-isobutyronitrile (ou AIBN) dont la masse représente 1% de la masse totale de monomères POE. Ce mélange est ensuite introduit à l'aide d'une seringue entre deux plaques de verre séparées par un joint de Téflon®. Après décomposition thermique de l'amorceur radicalaire lors du traitement thermique, les fonctions méthacrylate du PEGDM et du PEGM sont amorcées et copolymérisées, conduisant à la formation du réseau (voir figure 7) sous la forme d'un film.

Les semi-RIPs sont préparés à partir de la solution (PEGM/PEGDM/AIBN) qui vient d'être décrite, à laquelle est rajouté 5% en masse de monomère EDOT.

**1.2.** La seconde étape de la préparation de semi-RIPs POE/PEDOT consiste à former le Polymère Conducteur Electronique (ou PEDOT). Pour cela, les réseaux POE 50/50 contenant 5% en masse d'EDOT sont immergés dans 100 mL d'une solution oxydante, dont la concentration en FeCl3 est de 0,23 mol/L. La polymérisation de l'EDOT est effectuée à 50°C pendant 1 heure. A la fin de cette polymérisation, les matériaux sont immergés successivement dans plusieurs bains de méthanol afin d'enlever l'excès de FeCl3 et l'EDOT n'ayant pas polymérisé. Les bords de l'échantillon sont coupés pour supprimer les courts-circuits.

Les matériaux résultants de cette synthèse présentent une répartition hétérogène du PEDOT dans l'épaisseur de la matrice (figure 1). Cette répartition hétérogène représente toute l'originalité de l'architecture des semi-RIPs puisqu'elle permet de retrouver la configuration (Anode/Electrolyte/Cathode) des Dispositifs Electro-Émissifs sous la forme d'un seul bloc.

La synthèse des semi-RIPs a été étudiée afin d'obtenir des matériaux dont la teneur en PEDOT est proche de 1% en masse. L'étude de l'influence des paramètres de polymérisation de l'EDOT présentée ici repose sur les teneurs massiques en PEDOT des systèmes obtenus, dont la détermination a été effectuée par analyse élémentaire sur l'élément S.

Le tableau 1 regroupe les teneurs massiques en PEDOT de réseaux POE/PEDOT dont les seules différences dans les conditions de synthèse sont la durée et/ou la température de polymérisation de l'EDOT.

**Tableau 1. Teneur massique en PEDOT de semi-RIPs POE/PEDOT en fonction du temps et de la température de polymérisation.**

| | | **Température (°C)** | | | | |
|---|---|---|---|---|---|---|
| | | **25** | **30** | **35** | **40** | **50** |
| **Temps (heures)** | **1** | 0,3 | | | | 1,2 |
| | **5** | 0,6 | | | | 2,3 |
| | **6** | 0,4 | 0,7 | 1,4 | 1,4 | 2,6 |
| | **16** | 0,6 | | | | 3,6 |
| | **24** | 1,1 | | | | 4,9 |

### EXEMPLE 2 : Propriétés des matériaux

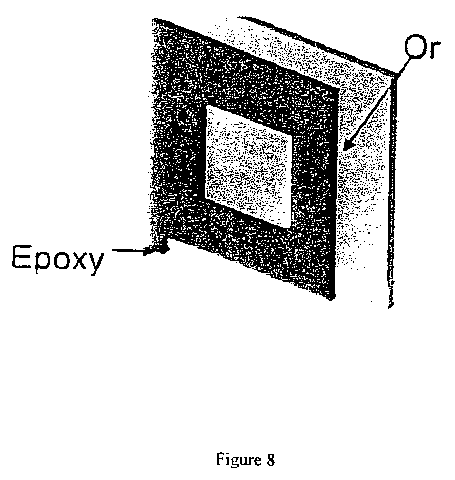

Les semi-RIPs POE/PEDOT, dont la synthèse vient d'être décrite, peuvent être directement utilisés en tant que Dispositif Electro-Émissif (ou DEE) une fois qu'ils sont gonflés d'un électrolyte. Leurs performances optiques sont caractérisées à l'aide d'un support de mesure, schématisé sur la figure 8. Il est composé de deux plaques époxy métallisées avec de l'or par un procédé de PVD (Dépôt Physique par phase Vapeur). Les DEE sont insérés entre ces deux plaques époxy. Une fenêtre est préalablement découpée dans une des faces du support afin de pouvoir caractériser les changements de propriétés optiques de la surface considérée, nommée « surface active », ou « couche active » dans la suite de cet exposé. Ce support, conçu de manière à s'adapter aux différents spectrophotomètres utilisés, permet d'appliquer une différence de potentiel donnée entre les deux faces du DEE et de mesurer la réflexion, l'émissivité, ou la température apparente, (suivant la nature de l'expérience) de la surface active.

L'application d'une différence de potentiel aux bornes du DEE donne lieu à plusieurs phénomènes. Le PEDOT d'une des faces du matériau s'oxyde en même temps que celui de l'autre face se réduit. Pour éviter toute confusion due à la symétrie des semi-RIPs, nous ne nous intéresserons qu'aux phénomènes se produisant à la surface active du DEE. Ainsi, lorsqu'il est fait référence aux semi-RIPs à l'état oxydé, il s'agira de l'état d'oxydation du PEDOT de la surface active. L'application d'une différence de potentiel positive entraîne une oxydation du PEDOT de la surface active. Inversement, l'application d'une différence de potentiel négative entraîne la réduction du PEDOT.

Le PEDOT oxydé présente un pouvoir réflecteur élevé. A l'inverse, il est peu réflecteur (et donc très absorbant) lorsqu'il est réduit. En termes de DEE, cela se traduit par une variation d'émissivité de la surface active : le PEDOT oxydé est moins émissif que le PEDOT réduit. L'application d'une différence de potentiel positive a pour effet de diminuer l'émissivité de la surface active, et inversement. Les caractérisations des DEE effectuées mettent en relation des notions d'électrochimie et d'optique. Les correspondances entre ces relations sont récapitulées dans le tableau 2 afin d'aider à la compréhension des futures descriptions.

**Tableau 2. Récapitulatif de la correspondance entre les états électrochimiques et optiques du PEDOT de la surface active des DEE.**

| **Etat électrochimique du PEPOT** | | **Etat optique du PEDOT** | |
|---|---|---|---|
| **Sens de la différence de potentiel appliquée (V)** | **Etat d'oxydation du PCE** | **En réflexion** | **En émissivité** |
| Positive | Oxydé/dopé | Réflecteur | Peu émissif |
| Négative | Réduit/dédopé | Absorbant | Très émissif |

Les caractérisations optiques des semi-RIPs seront essentiellement des mesures de réflexion. L'émissivité et la réflexion étant complémentaires dans le cas d'un corps opaque, il est possible de connaître la valeur de l'une directement à partir de l'autre. D'après la loi de Kirchhoff, la valeur de l'absorbance d'un corps est égale à celle de son émissivité (A= ). Dans le cas d'un corps opaque (T=0), l'émissivité ε peut alors s'exprimer par ε =1-R, où R représente le coefficient de réflexion.

La teneur en PEDOT des semi-RIPs est le paramètre qui a le plus d'importance sur leurs propriétés optiques. Nous avons étudié les spectres en réflexion des états oxydés et réduits de semi-RIP différant par leur teneur en PEDOT. Dans la suite de cet exposé, nous désignerons la réflexion de l'état oxydé par %R_{oxydé} et celle de l'état réduit par %R_{réduit}

Les propriétés optiques de ces matériaux sont reproductibles. En effet, l'écart type de la valeur de contraste à 2,5µm de l'ensemble de la population des semi-RIPs POE/PEDOT dont la polymérisation de l'EDOT a été effectuée 1 heure à 50°C est de 1,8. Cette valeur traduit bien que la synthèse mise au point amène à des résultats reproductibles. En conséquence, les systèmes dont la teneur en PEDOT est de 1,1% en masse ont été étudiés.

### Etude dans le Proche-Infrarouge (PIR)

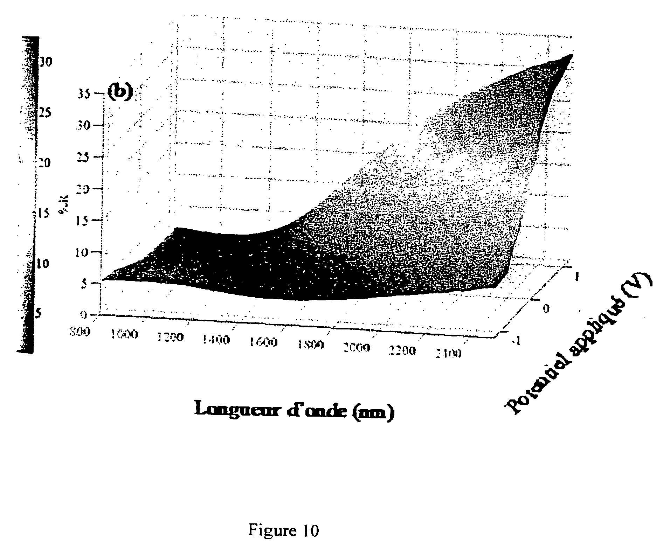

L'allure des spectres en réflexion dans le PIR en fonction de la tension appliquée aux bornes des DEE est reportée sur la figure 10. La représentation en 3 dimensions permet de mieux apprécier la variation des spectres entre 1000 nm et 1500 nm.

L'un des intérêts majeurs de l'électrostimulation apparaît sur ces représentations. En effet, à chaque tension appliquée correspond un spectre en réflexion et une valeur de réflexion à 2,5µm. Cela signifie qu'il est possible de choisir quelle valeur de réflexion doit afficher le semi-RIP, mettant en avant la capacité d'adaptabilité de ces matériaux.

### Etude dans l'Infrarouge

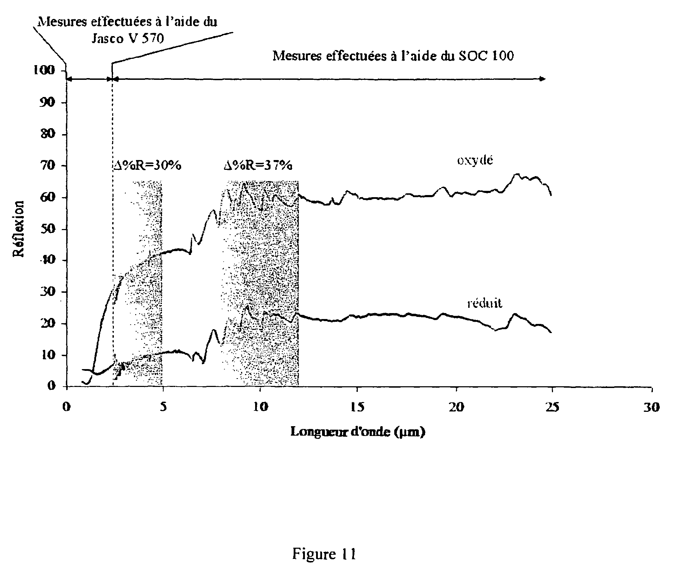

Les spectres en réflexion d'un semi-RIP contenant 1,1% en masse de PEDOT sont représentés sur la figure 11 entre 0,8µm et 25µm. Les Bandes II et III (respectivement 3-5µm et 8-12 µm) sont représentées par les zones grisées sur cette figure. Cette figure illustre bien la continuité des spectres caractérisés à l'aide des deux instruments de mesure différents. Le spectre du haut à l'état oxydé (à 1,2V) et le spectre du bas correspond à l'état réduit (à -1,2V). La continuité entre les deux mesures permet de valider les études effectuées dans le PIR.

A partir de des spectres représentés sur la figure 11, la valeur des contrastes en réflexion dans les bandes II et bande III a été déterminée. Ces valeurs de la réflexion sont obtenues par intégration sur la largeur du domaine spectral de la bande considérée. Les contrastes en réflexion, calculés à partir de la différence entre %R_{oxydé} et %R_{réduit} sur chacune des deux bandes, sont de 30% en bande II et de 37% en bande III.

Ces valeurs de réflexion sont très intéressantes, puisque les propriétés de réflexion de systèmes furtifs sont considérées être comprises entre 10% et 50% en bande II et 20% et 60% en bande III. Dans le tableau 3 sont regroupées les valeurs de réflexion requises par le cahier des charges, celles des DEE à base de semi-RIPs, et celles des dispositifs conçus par l'équipe de Chandrasekhar [1]. Les valeurs de contraste en réflexion et du facteur de modulation (calculé à partir du rapport entre %R_{oxydé} et %R_{réduit}) sont également reportées dans ce tableau.

**Tableau 3. Tableau récapitulatif des propriétés optiques requises pour certaines applications de furtivité, d'un semi-RIP POE/PEDOT et d'un DEE à base de PANI/PDPA en Bandes II et III.**

| | **Valeurs requises pour les applications de furtivité** | | **Semi-RIP POE/PEDOT** | | **DEE à base de PANI/PDPA** | |
|---|---|---|---|---|---|---|
| | **Bande II** | **Bande III** | **Bande II** | **Bande III** | **Bande II** | **Bande III** |
| **%R_{réduit}** | 10 | 20 | 9 | 20 | 20 | 15 |
| **%R_{oxydé}** | 50 | 60 | 39 | 57 | 50 | 60 |
| **Contraste** | 40 | 40 | 30 | 37 | 30 | 45 |
| **Facteur de modulation** | 5 | 3 | 4,3 | 2,9 | 2.5 | 4 |

Les systèmes conçus par Chandrasekhar [1] répondent eux aussi aux exigences du cahier de charge concernant les propriétés optiques des DEE. En bande II, la valeur du contraste des DEE à base de semi-RIP et celle des dispositifs à base de PANI/PDPA sont équivalentes (30%). En revanche, le facteur de modulation des semi-RIPs est plus élevé (4,3). Les changements d'état optique des semi-RIPs correspondent donc mieux à ceux requis pour les applications de furtivité. En Bande III, les dispositifs conçus par Chandrasekhar [1] possèdent un contraste en réflexion et un facteur de modulation sensiblement plus élevés (respectivement 45% et 4, alors que le contraste des semi-RIPs est de 37% et le facteur de modulation vaut 2,9). Les propriétés des DEE à base de semi-RIPs restent cependant très satisfaisantes tout en présentant l'avantage d'être des matériaux flexibles et monoblocs, ce qui n'est pas le cas des DEE à base de PANI/PDPA.

### Etude du temps de réponse.

Le temps de réponse est le temps nécessaire à un dispositif pour passer d'un état optique à l'autre. Il est mesuré à 90% du contraste maximum %Rₘₐₓ. En effet, nous estimons qu'il n'est pas possible pour l'oeil humain de faire la différence entre 100% et 90% du contraste. Il est cependant reporté dans la littérature des temps de réponse mesurés à 95% du contraste maximal. Plusieurs facteurs influencent la vitesse à laquelle les DEE changent d'état d'émissivité. La teneur en électrolyte, l'état d'oxydation initial du semi-RIP et la température de fonctionnement sont autant de facteurs qui sont étudiés dans cette partie.

### α.Influence de la teneur en électrolyte.

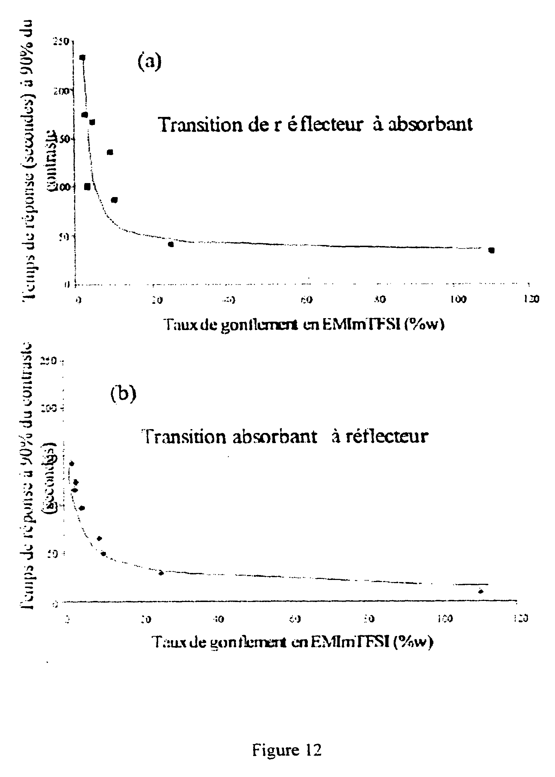

Le rôle de la teneur en EMImTFSI des DEE est représenté sur la figure 12. La figure 12(a) représente le temps de réponse pour la transition réflecteur/absorbant en fonction de la teneur en électrolyte des DEE, et la figure 12(b) représente l'évolution de la transition absorbant/réflecteur.

La même tendance est observée pour les deux évolutions : le changement d'état est lent lorsque la teneur en électrolyte est faible (2-3%), et le temps de réponse devient plus court lorsque la teneur en électrolyte augmente. Cette tendance est liée à la conductivité ionique du PSE, qui est directement dépendante de la teneur en EMlmTFSI.

Sur les graphiques, aucun point n'a été pris entre 25% et 110% en masse d'EMlmTFSI. La raison est que pour ces taux de gonflement, les matériaux sont soumis à des contraintes mécaniques très importantes. Le gonflement n'est pas homogène (il se fait préférentiellement par les bords du matériau) et provoque une contorsion des semi-RIPs. Il n'est pas possible de faire des mesures sur de tels matériaux, puisque leur surface n'est pas plane. Lorsque les semi-RIPs sont gonflés à saturation en liquide ionique, la répartition de l'EMImTFSI est plus homogène, et la surface du film est plane.

C'est d'ailleurs à cette teneur que les meilleurs temps de réponse sont obtenus (de l'ordre d'une dizaine de secondes pour la transition absorbant/réflecteur). La saturation en liquide ionique des semi-RIPs à 1,1% de PEDOT est atteinte au bout de 20 heures d'immersion. Cependant, la durée de gonflement dépend fortement de la surface totale de l'échantillon. En effet, le liquide ionique ne pénètre que par les bords (c'est-à-dire par l'épaisseur) des semi-RIPs, là où il n'y a pas de PEDOT. Le gonflement se révèle beaucoup plus long pour les films dont la surface est étendue si on souhaite qu'il soit homogène.

### β. Influence de la température de fonctionnement des DEE.

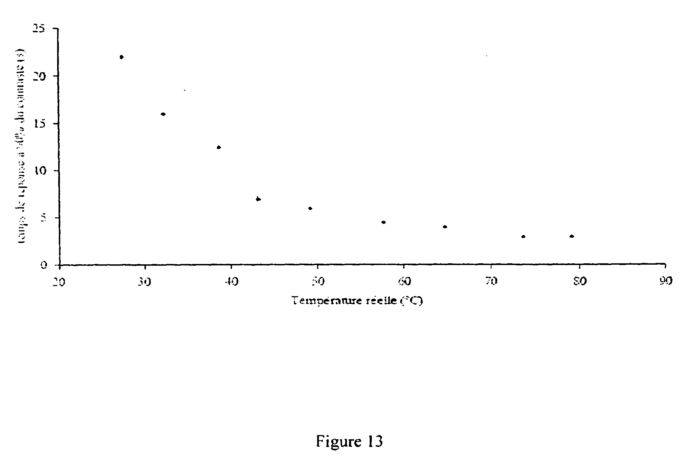

L'étude l'influence de la température de fonctionnement sur les temps de réponse a été menée à l'aide de caméras infrarouges au département-LOT d'Arcueil. Les logiciels de traitement de données employés permettent de déterminer quantitativement et de façon précise les variations de température apparente. Comme cela a été démontré dans la partie précédente, la variation de la réflexion de la surface active induit la modulation de sa température apparente. Les temps de réponse ont été déterminés à partir des vidéos filmées avec la caméra IR en bande III et ont été mesurés à 90% de la variation de température apparente pour plusieurs températures comprises entre 25°C et 80°C. L'évolution de ces temps de réponse en fonction de la température d'utilisation des DEE est reportée sur la figure 13.

Le temps de réponse diminue drastiquement lorsque la température augmente. Il est de l'ordre de 3 secondes à la température de 80°C. La teneur en électrolyte du semi-RIP caractérisé dans cette étude est de 20% en masse. Pour des semi-RIPs gonflés à saturation en EMImTFSI (non reportés ici), le temps de réponse à 80°C est plus faible : de l'ordre de la seconde.

Cette étude sur les temps de réponse permet d'apporter une conclusion sur les besoins énergétiques des systèmes. L'énergie électrique consommée pendant 30 secondes par les systèmes lors de la transition entre l'état le plus dopé et le plus dédopé est de 108 J/m², en considérant que la surface du DEE est de 1^{m2}. Alimenté avec une batterie lithium d'énergie 400kJ/kg, ce DEE devrait être en mesure d'effectuer 4000 changements d'états consécutifs avant que la source d'énergie ne soit épuisée. Cela correspond à une autonomie de 33 heures en utilisation continue.

### Etude de l'effet mémoire

L'effet mémoire est le temps pendant lequel le DEE conserve une émissivité donnée après ouverture du circuit électrique. L'évolution de l'effet mémoire a également été suivie dans l'infrarouge. Les Bandes Il et III sont les domaines spectraux privilégiés pour l'utilisation des DEE à base de semi-RIPs. C'est donc à partir de l'évolution de l'effet mémoire dans ces bandes que vont être déterminés les besoins énergétiques des DEE nécessaires aux DEE pour rester dans un état optique. L'évolution de l'état du polymère conducteur électronique le moins stable de la surface active, c'est-à-dire l'état réduit, a été suivi. Cet état est, en effet, celui qui évolue le plus rapidement, il s'agit également de celui qui nécessite le plus d'énergie pour rester stable.

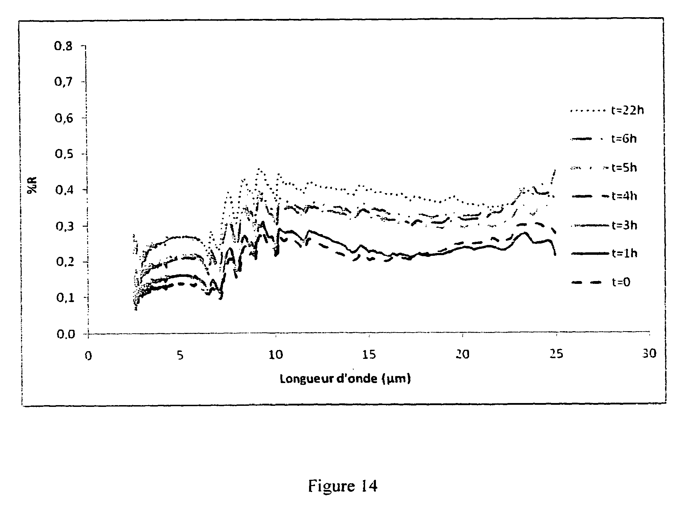

La figure 14 représente les spectres en réflexion dans l'IR d'un DEE au cours du temps en circuit ouvert. La réflexion du matériau augmente avec le temps. En effet, les spectres évoluent vers des valeurs de réflexion de plus en plus élevées au cours du temps.

L'évolution de la réflexion dans l'infrarouge présente le même comportement que dans le PIR. En effet, c'est au bout de 2heures environ que le matériau a perdu 10% de son pouvoir réflecteur. C'est donc au bout de deux heures qu'il est nécessaire d'appliquer une différence de potentiel au matériau pour qu'il revienne dans l'état optique désiré.
En considérant qu'il faut 2 heures au matériau pour perdre 10% de son contraste, l'application de -1,2V pendant 30 secondes (temps et tension nécessaires au rétablissement de l'état le moins réflecteur), l'énergie consommée est de 10 J, si on considère une surface extrapolée de 1^{m2}. La consommation énergétique des DEE à base de semi-RIPs est donc faible de ce point de vue. A l'aide d'une batterie au lithium de 1 kg (dont l'énergie est de 400 kJ/kg d'après l'état de l'art) l'autonomie du système serait de 10 ans dans ces conditions.

### Cyclabilité

La température d'utilisation des DEE est susceptible d'être supérieure à la température ambiante. Leur cyclabilité a donc été étudiée aux températures de 60° C et de 100°C. Le tableau 4 récapitule le nombre de cycles au bout desquels une certaine perte de l'électroactivité des DEE est mesurée, en fonction de leur température d'utilisation.

Les DEE sont capables de cycler à température ambiante environ 13000 fois avant que leurs propriétés ne se détériorent de 10%. En augmentant la température, cette diminution se produit plus rapidement : à la température 60°C, au bout de 12000 cycles, les propriétés des DEE diminuent de 25%. A 100°C, L'évolution des propriétés des DEE se produit encore plus rapidement : leur stabilité reste tout de même satisfaisante pendant 1000 cycles à cette température d'utilisation.

| | **Nombre de cycles** | | | **Nombre de jours** | | |
|---|---|---|---|---|---|---|
| **Température** | **20°C** | **60°C** | **100°C** | **20°C** | **60°C** | **100°C** |
| Perte de 10% | 13000 | 8500 | 1000 | 9 | 6 | 0,7 |
| Perte de 25% | 21000 | 12000 | 1800 | 15 | 8 | 1,3 |
| Perte de 50% | 24000 | 13000 | 2500 | 17 | 9 | 1,7 |
| Perte de 80% | 30000 | 15000 | 3300 | 21 | 10 | 2,3 |

### Bilan énergétique

Le tableau 5 regroupe les performances énergétiques des DEE. Ces grandeurs dépendent de l'état d'oxydation initial du PEDOT de la surface active et de la valeur de la tension appliquée. Les matériaux sont gonflés à saturation en EMImTFSI et leur température de fonctionnement est la température ambiante.

**Tableau 5. Tableau récapitulatif des temps de réponse (τΓ), des efficacités de réflexion (ηR), de la consommation énergétique (E) et du nombre de switchs que peuvent effectuer les DEE à base de semi-RIPs.**

| **Etat initial** | **absorbant/réduit** | | | | |
|---|---|---|---|---|---|
| ΔE(V) | 1,2 | 0,4 | 0,2 | -0,1 | -0,2 |
| τΓ(sec) | 10,0 | 14,0 | 15,5 | 18,5 | 24,0 |
| ηR(cm/C) | 168,0 | 333,3 | 213,6 | 195,0 | 347.6 |
| E (J/m) | 96,0 | 30,4 | 13,4 | 6,3 | 8,2 |
| Nombre de switchs | 4,2.10³ | 1,3.10⁴ | 3,0.10⁴ | 6,3.10⁴ | 4,9.10⁴ |

| **Etat initial** | **réflecteur/oxydé** | | | | |
|---|---|---|---|---|---|
| ΔE(V) | -1,2 | -0,6 | -0,4 | -0,2 | 0,1 |
| τΓ(sec) | 33,0 | 24,5 | 14,0 | 12,5 | 12,0 |
| ηR(cm/C) | 128,4 | 164,6 | 192,4 | 232,4 | 626,4 |
| E (J/m) | 121,2 | 47,3 | 27,0 | 11,2 | 2,1 |
| Nombre de switchs | 3,3.10³ | 8,5.10³ | 1.5.10⁴ | 3,6.10⁴ | 1,9.10¹ |

L'énergie électrique consommée par m² permet de se rendre compte des besoins des systèmes. Dans le cas où le système consomme le plus d'énergie, c'est-à-dire lorsqu'il commute entre les états optiques les plus éloignés, l'alimentation par une batterie au lithium (E=400kJ/kg) permet d'envisager une autonomie de 3700 cycles consécutifs (entre -1,2V à +1,2V, puis de +1,2V à -1,2V). L'effet mémoire des DEE est élevé. Il n'est pas nécessaire de leur fournir une grande quantité d'énergie pour que leur état optique reste constant. Il a été montré qu'une autonomie de 10 ans serait prévisible pour conserver un DEE dans son état optique s'il est alimenté par une batterie au lithium.

### Listes des références

[1] P. Chandrasekhar et al., Advanced Functional Materials, 2002, 12 (2), p. 95-103 et Synthetic Metal 2005, 155 (3), p. 623-627.
[2] R.Gangopadhyay, A. De J. Mater. Chem. 2002, 12, 3591.

## Revendications

1. Matériau sous forme de réseau semi-interpénétré de polymères (semi-RIP) ou de réseau interpénétré de polymères (RIP) de structure symétrique B-A-B dans lequel :
• A est un réseau de polymère ou un RIP conducteur ionique sous la forme d'une couche ;
• B est un polymère conducteur électronique choisi parmi le poly(3,4-éthylènedioxythiophène) (PEDOT) ou le poly(3,4-propylènedioxythiophène) ou l'un de ces polymères substitué par une chaîne aliphatique, un groupement alcoxy ou encore un groupement polaire tel que carboxylate, sulfonate, alcoolate, et est interpénétré dans la couche de réseau de polymère (ou de RIP) A; et
• Le polymère B est présent à une teneur de 0,5 à 2,5% en masse par rapport au poids total du matériau.

2. Matériau selon la revendication 1, dans lequel le réseau de polymère ou le RIP A est un réseau de copolymère ou un réseau interpénétré de (co)polymères.

3. Matériau selon la revendication 1 ou 2, dans lequel le réseau de polymère ou le RIP A présente des groupements chimiques polaires choisis dans le groupe comprenant -CN, -COOCH₃, -COOH, -OH, -NH₂ et les groupements éther.

4. Matériau selon l'une quelconque des revendications 1 à 3, dans lequel le réseau de polymère ou le RIP A est choisi dans le groupe comprenant le polyoxyde d'éthylene (POE), le caoutchouc nitrile butadiène (NBR), le polytétrahydrofuranne (PTHF), le polycarbonate, les dérivés de la cellulose, les poly(méth)acrylates d'alkyle en C1 à C4, ou un mélange de ceux-ci formant un réseau interpénétré de (co)polymères.

5. Matériau selon l'une quelconque des revendications 1 à 4, dans lequel le réseau de polymère ou le RIP A est densifié en groupements chimiques polaires par ramification des réseaux.

6. Matériau selon l'une quelconque des revendications 1 à 5 dans lequel le réseau de polymère A est le polyoxyde d'éthylene (POE) ayant une teneur en branches pendantes de 50% en masse par rapport à la masse totale de POE.

7. Matériau selon l'une quelconque des revendications 1 à 6 dans lequel le polymère B est le poly(3,4-éthylènedioxythiophène) (PEDOT).

8. Matériau selon l'une quelconque des revendications 1 à 7 dans lequel la couche de réseau de polymère (ou de RIP) A a une épaisseur de 10 à 500 micromètres.

9. Matériau selon l'une quelconque des revendications 1 à 8, dans lequel le polymère B est interpénétré dans la couche de réseau de polymère ou le RIP A sur une épaisseur de 0,5 à 30% par rapport à l'épaisseur de la couche de réseau de polymère A.

10. Procédé de préparation d'un matériau selon l'une quelconque des revendications 1 à 9, comprenant les étapes successives suivantes :
(i) la formation d'une couche de réseau de polymère ou de RIP A imprégnée de monomère M_{B} précurseur du polymère B; dans lequel le monomère M_{B} est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate ;
(ii) la polymérisation oxydative du monomère M_{B} en polymère B par mise en contact de la couche de réseau de polymère ou du RIP A imprégnée de monomère M8 avec un oxydant formant un matériau selon l'une quelconque des revendications 1 à 9.

11. Procédé de préparation d'un matériau selon la revendication 10, dans lequel, au cours de l'étape (i), la formation de la couche de réseau de polymère ou de RIP A imprégnée de monomère M_{B} comprend une étape de réticulation d'un précurseur en polymère A, ce précurseur étant un polymère réticulable, éventuellement en présence du monomère M_{B}.

12. Procédé de préparation d'un matériau selon la revendication 11 dans lequel, au cours de l'étape (i) :
• le précurseur est choisi dans le groupe comprenant le caoutchouc nitrile butadiène (NBR)1 la méthylcellulose et l'acétobutyrate de cellulose ; et/ou
• la réticulation du précurseur en polymère A est réalisée par réaction avec un composé chimique choisi dans le groupe comprenant le soufre, les peroxydes, les pluri-isocyanates et les aldéhydes.

13. Procédé de préparation d'un matériau selon l'une quelconque des revendications 10 à 12 dans lequel, au cours de l'étape (i), la formation de la couche de réseau de polymère A ou de RIP imprégnée de monomère M_{B} comprend une étape de polymérisation d'un monomère ou d'un mélange de monomères M_{A} précurseur(s) du polymère A, éventuellement en présence du monomère M_{B}.

14. Procédé de préparation d'un matériau selon l'une quelconque des revendications 10 à 13 dans lequel, au cours de l'étape (i), la polymérisation radicalaire est réalisée suivant l'une ou plusieurs des conditions suivantes :
• le monomère ou le mélange de monomères M_{A} est choisi dans le groupe comprenant le poly(éthylène glycol)méthacrylate (PEGM), le poly(éthylène glycol)diméthacrylate (PEGDM), le polyméthacrylate de méthyle, le polyacrylonitrile ou un mélange de ceux-ci;
• le monomère ou le mélange de monomères M_{A} est sous la forme d'un mélange de deux monomères M_{A1} et M_{A2} ;
• le monomère ou le mélange de monomères M_{A} est sous la forme d'un mélange équimolaire de deux monomères M_{A1} et M_{A2};
• les monomères M_{A1} et M_{A2} sont respectivement le polyéthylène glycol)méthacrylate (PEGM) et le poly(éthylène glycol)diméthacrylate (PEGDM) ;
• le monomère M_{B} est présent initialement à la concentration de 1 à 20% en masse totale de monomère ou du mélange de monomères M_{A}, de préférence à la concentration de 5% ;
• la polymérisation radicalaire est réalisée en présence d'un amorceur radicalaire ;
• l'amorceur radicalaire est choisi dans le groupe comprenant les composés azobis de formule R-N=N-R' et les composés peroxydes de formule R-O-O-R', R et R', identiques ou différents, étant choisis dans le groupe comprenant les alkyles, hétéroalkyles, aryles, hétéroaryles, éventuellement substitués par des groupements -CO1 - CN, -NHb, -NH ;
• l'amorceur radicalaire est présent initialement à la concentration de 1 à 5 % en masse totale de monomère ou du mélange de monomères M_{A}.

15. Procédé selon l'une quelconque des revendications 10 à 14 dans lequel l'étape (i) est réalisée suivant l'une ou plusieurs des conditions suivantes :
• par traitement thermique ou par photopolymérisation
• à une température de 40 à 100°C, de préférence de 50 à 80°C ;
• pendant une durée de 2 à 10 h, de préférence de 4 à 6h.

16. Procédé selon l'une quelconque des revendications 10 à 15 dans lequel l'étape (ii) est réalisée suivant l'une ou plusieurs des conditions suivantes :
• l'oxydant est choisi dans le groupe comprenant le FeCl₃, le tosylate ferrique ; le sulfate ferrique ou le nitrate de cérium et d'ammonium
• la mise en contact est réalisée par immersion de la couche du réseau de polymère ou du RIP A imprégnée de monomère M_{B} dans une solution comprenant l'oxydant ;
• la solution comprenant l'oxydant a une concentration en oxydant de 0,1 à 2 mole/litre
• la solution comprenant l'oxydant comprend un solvant choisi parmi l'eau, le chloroforme, le dichlorométhane, l'acétonitrile, les alcools en C₁ à C₄ ou un mélange de ceux-ci ;
• la mise en contact est réalisée à une température de -10 à 80°C ;
• la mise en contact est réalisée pendant une durée de 10 minutes à 24h.

17. Procédé de préparation d'un matériau selon l'une quelconque des revendications 1 à 9, comprenant les étapes successives suivantes :
(i) le gonflement du réseau de polymère (ou de RIP) A dans un milieu électrolytique contenant le monomère M_{B} précurseur du polymère B ; dans lequel le monomère MB est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate,
(ii) la polymérisation oxydative du monomère M_{B} en polymère B par électropolymérisation du monomère MB au contact de la face 1 de la couche de réseau de polymère (ou du RIP) A imprégnée d'électrolyte et de monomère MB;
(iii) le gonflement du réseau de polymère (ou du RIP) A dans un milieu électrolytique contenant le monomère M_{B} précurseur du polymère B ;
(iv) l'électropolymérisation du monomère M_{B} en polymère B au contact de la face 2 de la couche de réseau de polymère (ou du RIP) A imprégnées d'électrolyte et de monomère MB formant un matériau selon l'une quelconque des revendications 1 à 9.

18. Procédé de préparation d'un matériau selon l'une quelconque des revendications 1 à 9, comprenant les étapes successives suivantes :
(i) le gonflement du réseau de polymère (ou du RIP) A dans un milieu électrolytique contenant le monomère M_{B} précurseur du polymère B, dans lequel le monomère MB est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate ;
(ii) la polymérisation oxydative du monomère M_{B} en polymère B par électropolymérisation du monomère M_{B} au contact de la face 1 de la couche de réseau de polymère A imprégnées d'électrolyte et de monomère M_{B} ;
(iii) le gonflement du réseau de polymère (ou du RIP) A dans une solution de monomère M_{B} précurseur du polymère B ;
(iv) la polymérisation oxydative du monomère M_{B} en polymère B par mise en contact de la face 2 de la couche de réseau de polymères A imprégnées d'électrolyte et de monomère MB avec un oxydant formant un matériau selon l'une quelconque des revendications 1 à 9.

19. Procédé de préparation d'un matériau selon l'une quelconque des revendications 1 à 9 comprenant les étapes successives suivantes :
(i) le gonflement d'un premier réseau de polymère (ou de RIP) A dans un milieu électrolytique contenant le monomère M_{B} précurseur du polymère B, dans lequel le monomère MB est choisi dans le groupe comprenant le (3,4-éthylènedioxythiophène (EDOT), le 3-4 propylènedioxythiophène (PRODOT), ou l'un de ces monomères substitué par une chaîne aliphatique, un groupement alcoxy ou encore un groupement polaire tel que carboxylate, sulfonate, alcoolate ;
(ii) la polymérisation oxydative du monomère MB en polymère B par électropolymérisation du monomère M_{B} au contact de la face 1 de la couche de réseau de polymères A imprégnées d'électrolyte et de monomère M_{B} pour conduire au matériau 1 ;
(iii) le gonflement d'un second réseau de polymère (ou de RIP) A dans un milieu électrolytique contenant le monomère M_{B} précurseur du polymère B ;
(iv) la polymérisation oxydative du monomère M_{B} en polymère B par électropolymérisation du monomère M_{B} au contact de la face 1 de la couche de réseau de polymère (ou du RIP) A imprégnées d'électrolyte et de monomère M_{B} pour conduire au matériau 2 ;
(v) l'assemblage des matériaux 1 et 2 sous presse formant un matériau selon l'une quelconque des revendications 1 à 9.

20. Dispositif électroémissif (DEE) comprenant un matériau selon l'une quelconque des revendications 1 à 9.

21. Dispositif selon la revendication 20, comprenant, en outre, un électrolyte.

22. Dispositif selon la revendication 21, dans lequel l'électrolyte est présent à une concentration entre 20 et 150% en masse par rapport au poids total du matériau.

23. Dispositif selon l'une des revendications 21 ou 22, dans lequel l'électrolyte est choisi parmi les sels organiques ou les sels inorganiques d'imidazolium, de pyrrolidium, d'ammonium quaternaire, de phosphonium, les sels de lithium, de sodium, dans un solvant.

24. Dispositif selon l'une des revendications 21 ou 22, dans lequel l'électrolyte est un liquide ionique à température inférieure à 0°C choisi parmi les sels d'imidazolium, de pyrrolidium, d'ammonium quaternaire, de phosphonium, utilisés sans solvant.

25. Utilisation du matériau selon l'une quelconque des revendications 1 à 9 dans une des applications suivantes :
• comme matériau de furtivité, et/ou
• comme matériau pour améliorer l'isolation thermique, par exemple dans le bâtiment, et/ou
• comme matériau pour le remplacement des volets vénitiens des panneaux des satellites artificiels, et/ou
• comme matériau pour contrôler la température suivant l'exposition solaire ou la température extérieure.

## Patentansprüche

1. Material in Form eines semi-interpenetrierenden Polymernetzwerks (semi-IPN) oder interpenetrierenden Polymernetzwerks (IPN) symmetrischer B-A-B-Struktur, wobei:
- A ein ionenleitendes Polymernetzwerk oder ein IPN in Form einer Schicht ist;
- B ein elektronenleitendes Polymer ist, gewählt aus Poly(3,4-ethylendioxythiophen) (PEDOT) oder Poly(3,4-propylendioxythiophen) oder einem dieser Polymere, substituiert mit einer aliphatischen Kette, einer Alkoxygruppe oder aber einer polaren Gruppe wie etwa Carboxylat, Sulfonat, Alkoholat, und in die Polymernetzwerk- (oder IPN) Schicht A interpenetriert ist; und
- das Polymer B in einem Anteil von 0,5 bis 2,5 Masse%, bezogen auf das Gesamtgewicht des Materials, vorliegt.

2. Material nach Anspruch 1, wobei das Polymernetzwerk oder IPN A ein Copolymernetzwerk oder ein von (Co)Polymeren interpenetrierendes Netzwerk ist.

3. Material nach Anspruch 1 oder 2, wobei das Polymernetzwerk oder IPN A polare chemische Gruppen aufweist, die aus der Gruppe gewählt sind, die -CN,-COOCH₃, -COOH, -OH, -NH₂ und Ethergruppen umfasst.

4. Material nach einem der Ansprüche 1 bis 3, wobei das Polymernetzwerk oder IPN A aus der Gruppe gewählt ist, die Ethylenpolyoxid (EPO), Nitrilkautschuk (NBR), Polytetrahydrofuran (PTHF), Polycarbonat, Cellulosederivate, C₁-C₄-Alkylpoly(meth)acrylate oder ein Gemisch davon, das ein interpenetrierendes (Co)Polymernetzwerk bildet, umfasst.

5. Material nach einem der Ansprüche 1 bis 4, wobei das Polymernetzwerk oder IPN A, was funktionelle Gruppen anbelangt, durch Verzweigung der Netzwerke verdichtet ist.

6. Material nach einem der Ansprüche 1 bis 5, wobei das Polymernetzwerk A Ethylenpolyoxid (EPO) mit einem Anteil an frei hängenden Seitenketten von 50 Masse%, bezogen auf die Gesamtmasse des EPO, ist.

7. Material nach einem der Ansprüche 1 bis 6, wobei das Polymer B Poly(3,4-ethylendioxythiophen) (PEDOT) ist.

8. Material nach einem der Ansprüche 1 bis 7, wobei die Schicht des Polymernetzwerks (oder IPN) A eine Dicke von 10 bis 500 Mikrometer aufweist.

9. Material nach einem der Ansprüche 1 bis 8, wobei das Polymer B über eine Dicke von 0,5 bis 30 % in Bezug auf die Dicke der Schicht des Polymernetzwerks A in die Schicht des Polymernetzwerks oder IPN A interpenetriert ist.

10. Verfahren zur Herstellung eines Materials nach einem der Ansprüche 1 bis 9, umfassend die folgenden aufeinanderfolgenden Schritte:
(i) Bilden einer Schicht eines Polymernetzwerks oder IPN A, durchsetzt mit Monomer M_{B}, einer Vorstufe des Polymers B; wobei das Monomer M_{B} aus der Gruppe gewählt ist, die (3,4-Ethylendioxythiophen (EDOT), (3-4-Propylendioxythiophen (PRODOT) oder eines dieser Monomere, substituiert mit einer aliphatischen Kette, einer Alkoxygruppe oder aber einer polaren Gruppe wie etwa Carboxylat, Sulfonat, Alkoholat, umfasst;
(ii) oxidative Polymerisation des Monomers M_{B} zum Polymer B durch Inkontaktbringen der mit dem Monomer M8 durchsetzten Schicht des Polymernetzwerks oder IPN A mit einem Oxidationsmittel, wodurch ein Material nach einem der Ansprüche 1 bis 9 gebildet wird.

11. Verfahren zur Herstellung eines Materials nach Anspruch 10, wobei, während des Schritts (i), das Bilden der Schicht des Polymernetzwerks oder IPN A, durchsetzt mit Monomer M_{B}, einen Schritt der Vernetzung einer Vorstufe des Polymers A umfasst, wobei diese Vorstufe ein, gegebenenfalls in Gegenwart des Monomers M_{B}, vernetzungsfähiges Polymer ist.

12. Verfahren zur Herstellung eines Materials nach Anspruch 11, wobei während des Schritts (i):
- die Vorstufe aus der Gruppe gewählt ist, die Nitrilkautschuk (NBR)1, Methylcellulose und Celluloseacetobutyrat umfasst; und/oder
- die Vernetzung der Vorstufe zum Polymer A durch Reaktion mit einer chemischen Verbindung erfolgt, die aus der Gruppe gewählt ist, die Schwefel, Peroxide, Multi-Isocyanate und Aldehyde umfasst.

13. Verfahren zur Herstellung eines Materials nach einem der Ansprüche 10 bis 12, wobei, während des Schritts (i), das Bilden der Schicht des Polymernetzwerks oder IPN A, durchsetzt mit Monomer M_{B}, einen Schritt der Polymerisation eines Monomers oder eines Gemischs von Monomeren M_{A}, Vorstufe(n) des Polymers A, gegebenenfalls in Gegenwart des Monomers M_{B}, umfasst.

14. Verfahren zur Herstellung eines Materials nach einem der Ansprüche 10 bis 13, wobei, während des Schritts (i), die radikalische Polymerisation gemäß einer oder mehreren der folgenden Bedingungen durchgeführt wird:
- Das Monomer oder das Monomerengemisch M_{A} ist aus der Gruppe gewählt, die Poly(ethylenglycol)methacrylat (PEGM), Poly(ethylenglycol)dimethacrylat (PEGDM), Poly(methyl)methacrylat, Polyacrylnitril oder ein Gemisch davon umfasst;
- das Monomer oder Monomerengemisch M_{A} ist in Form eines Gemischs zweier Monomere, M_{A1} und M_{A2};
- das Monomer oder Monomerengemisch M_{A} ist in Form eines äquimolaren Gemischs zweier Monomere, M_{A1} und M_{A2};
- die Monomere M_{A1} und M_{A2} sind Poly(ethylenglycol)methacrylat (PEGM) bzw. Poly(ethylenglycol)dimethacrylat (PEGDM);
- das Monomer M_{B} liegt am Anfang in der Konzentration von 1 bis 20 %, bezogen auf die Gesamtmasse des Monomers oder Monomerengemischs M_{A}, vorzugsweise in der Konzentration von 5 %, vor;
- die radikalische Polymerisation erfolgt in Gegenwart eines Radikalstarters;
- der Radikalstarter ist aus der Gruppe gewählt, die Azobisverbindungen der Formel R-N=N-R' und Peroxidverbindungen der Formel R-O-O-R', umfasst, wobei R und R' gleich oder verschieden sind, wobei sie aus der Gruppe gewählt sind, die Alkyle, Heteroalkyle, Aryle, Heteroaryle, gegebenenfalls substituiert mit - CO1 - CN-, -NHb-, -NH-Gruppen, umfasst;
- der Radikalstarter liegt am Anfang in der Konzentration von 1 bis 5 %, bezogen auf die Gesamtmasse des Monomers oder Monomerengemischs M_{A} vor.

15. Verfahren nach einem der Ansprüche 10 bis 14, wobei der Schritt (i) gemäß einer oder mehreren der folgenden Bedingungen durchgeführt wird:
- durch Wärmebehandlung oder durch Photopolymerisation
- bei einer Temperatur von 40 bis 100 °C, vorzugsweise von 50 bis 80 °C;
- während einer Dauer von 2 bis 10 h, vorzugsweise von 4 bis 6 h.

16. Verfahren nach einem der Ansprüche 10 bis 15, wobei der Schritt (ii) gemäß einer oder mehreren der folgenden Bedingungen durchgeführt wird:
- das Oxidationsmittel ist aus der Gruppe gewählt, die FeCl₃, Eisen(III)-tosylat; Eisen(III)-sulfat oder Cer(IV)- und Ammoniumnitrat umfasst
- das Inkontaktbringen erfolgt durch Eintauchen der mit dem Monomer M_{B} durchsetzten Schicht des Polymernetzwerks oder IPN A in eine Lösung, die das Oxidationsmittel enthält;
- die Lösung, die das Oxidationsmittel enthält, weist eine Konzentration am Oxidationsmittel von 0,1 bis 2 mol/l auf
- die Lösung, die das Oxidationsmittel enthält, weist ein Lösungsmittel auf, das aus Wasser, Chloroform, Dichlormethan, Acetonitril, C₁-C₄-Alkoholen oder einem Gemisch davon gewählt ist;
- das Inkontaktbringen erfolgt bei einer Temperatur von -10 bis 80°C;
- das Inkontaktbringen erfolgt während einer Dauer von 10 min bis 24 h.

17. Verfahren zur Herstellung eines Materials nach einem der Ansprüche 1 bis 9, umfassend die folgenden aufeinanderfolgenden Schritte:
(i) Quellen des Polymernetzwerks (oder IPN) A in einem elektrolytischen Medium, welches das Monomer M_{B}, eine Vorstufe des Polymers B, enthält, wobei das Monomer MB aus der Gruppe gewählt ist, die (3,4-Ethylendioxythiophen (EDOT), 3-4-Propylendioxythiophen (PRODOT) oder eines dieser Monomere, substituiert mit einer aliphatischen Kette, einer Alkoxygruppe oder aber einer polaren Gruppe wie etwa Carboxylat, Sulfonat, Alkoholat, umfasst;
(ii) oxidative Polymerisation des Monomers M_{B} zum Polymer B durch Elektropolymerisation des Monomers MB in Kontakt mit der Fläche 1 der Schicht des Polymernetzwerks (oder IPN) A, durchsetzt mit Elektrolyt und Monomer MB;
(iii) Quellen des Polymernetzwerks (oder IPN) A in einem elektrolytischen Medium, welches das Monomer M_{B}, eine Vorstufe des Polymers B, enthält;
(iv) Elektropolymerisation des Monomers M_{B} zum Polymer B in Kontakt mit der Fläche 2 der Schicht des Polymernetzwerks (oder IPN) A, durchsetzt mit Elektrolyt und Monomer MB, wodurch ein Material nach einem der Ansprüche 1 bis 9 gebildet wird.

18. Verfahren zur Herstellung eines Materials nach einem der Ansprüche 1 bis 9, umfassend die folgenden aufeinanderfolgenden Schritte:
(i) Quellen des Polymernetzwerks (oder IPN) A in einem elektrolytischen Medium, welches das Monomer M_{B}, eine Vorstufe des Polymers B, enthält, wobei das Monomer MB aus der Gruppe gewählt ist, die (3,4-Ethylendioxythiophen (EDOT), 3-4-Propylendioxythiophen (PRODOT) oder eines dieser Monomere, substituiert mit einer aliphatischen Kette, einer Alkoxygruppe oder aber einer polaren Gruppe wie etwa Carboxylat, Sulfonat, Alkoholat umfasst;
(ii) oxidative Polymerisation des Monomers M_{B} zum Polymer B durch Elektropolymerisation des Monomers M_{B} in Kontakt mit der Fläche 1 der Schicht des Polymernetzwerks A, durchsetzt mit Elektrolyt und Monomer M_{B};
(iii) Quellen des Polymernetzwerks (oder IPN) A in einer Lösung des Monomers M_{B}, einer Vorstufe des Polymers B;
(iv) oxidative Polymerisation des Monomers M_{B} zum Polymer B durch Inkontaktbringen der Fläche 2 der mit Elektrolyt und dem Monomer MB durchsetzten Schicht des Polymernetzwerks A mit einem Oxidationsmittel, wodurch ein Material nach einem der Ansprüche 1 bis 9 gebildet wird.

19. Verfahren zur Herstellung eines Materials nach einem der Ansprüche 1 bis 9, umfassend die folgenden aufeinanderfolgenden Schritte:
(i) Quellen eines ersten Polymernetzwerks (oder IPN) A in einem elektrolytischen Medium, welches das Monomer M_{B}, eine Vorstufe des Polymers B, enthält, wobei das Monomer MB aus der Gruppe gewählt ist, die (3,4-Ethylendioxythiophen (EDOT), 3-4-Propylendioxythiophen (PRODOT) oder eines dieser Monomere, substituiert mit einer aliphatischen Kette, einer Alkoxygruppe oder aber einer polaren Gruppe wie etwa Carboxylat, Sulfonat, Alkoholat umfasst;
(ii) oxidative Polymerisation des Monomers MB zum Polymer B durch Elektropolymerisation des Monomers M_{B} in Kontakt mit der Fläche 1 der Schicht des Polymernetzwerks A, durchsetzt mit Elektrolyt und Monomer M_{B}, um zum Material 1 zu gelangen;
(iii) Quellen eines zweiten Polymernetzwerks (oder IPN) A in einem elektrolytischen Medium, welches das Monomer M_{B}, eine Vorstufe des Polymers B, enthält;
(iv) oxidative Polymerisation des Monomers M_{B} zum Polymer B durch Elektropolymerisation des Monomers M_{B} in Kontakt mit der Fläche 1 der Schicht des Polymernetzwerks (oder IPN) A, durchsetzt mit Elektrolyt und Monomer M_{B}, um zum Material 2 zu gelangen;
(v) Zusammenpressen der Materialien 1 und 2, wodurch ein Material nach einem der Ansprüche 1 bis 9 gebildet wird.

20. Elektroemissive Vorrichtung (EEV), umfassend ein Material nach einem der Ansprüche 1 bis 9.

21. Vorrichtung nach Anspruch 20, außerdem einen Elektrolyten umfassend.

22. Vorrichtung nach Anspruch 21, wobei der Elektrolyt in einer Konzentration zwischen 20 und 150 Masse%, bezogen auf das Gesamtgewicht des Materials, vorliegt.

23. Vorrichtung nach einem der Ansprüche 21 oder 22, wobei der Elektrolyt aus den organischen Salzen oder den anorganischen Salzen von Imidazolium, Pyrrolidium, quaternärem Ammonium, Phosphonium, den Lithium-, Natriumsalzen in einem Lösungsmittel gewählt ist.

24. Vorrichtung nach einem der Ansprüche 21 oder 22, wobei der Elektrolyt bei einer Temperatur unter 0 °C eine ionische Flüssigkeit ist, die aus den Salzen von Imidazolium, Pyrrolidium, quaternärem Ammonium, Phosphonium in einem Lösungsmittel gewählt ist.

25. Verwendung des Materials nach einem der Ansprüche 1 bis 9 bei einer der folgenden Anwendungen:
- als Tarnmaterial und/oder
- als Material zur Verbesserung der Wärmedämmung, beispielsweise im Gebäude, und/oder
- als Material, um Jalousien der Panels künstlicher Satelliten zu ersetzen und/oder
- als Material, um die Temperatur je nach Sonneneinstrahlung oder Außentemperatur zu regeln.

## Claims

1. Material in the form of a semi-interpenetrating polymer network (semi-IPN) or interpenetrating polymer network (IPN) with symmetrical B-A-B structure wherein:
- A is a polymer network or an ionic conductor IPN in the form of a layer;
- B is an electronic conductor polymer chosen from poly(3,4-ethylenedioxythiophene) (PEDOT) or poly(3,4-propylenedioxythiophene) or one of these polymers substituted with an aliphatic chain, an alkoxy group or again a polar group such as carboxylate, sulphonate, alcoholate, and is interpenetrated in the network layer of polymer (or IPN) A; and
- The polymer B is present at a content of 0.5 to 2.5% by weight based on the total weight of the material.

2. Material according to claim 1, wherein the polymer network or the IPN A is a copolymer network or an interpenetrating (co)polymer network.

3. Material according to claim 1 or 2, wherein the polymer network or the IPN A has polar chemical groups selected from the group comprising -CN, -COOCH3, -COOH, -OH, -NH2 and the ether groups.

4. Material according to any of claims 1 to 3, wherein the polymer network or the IPN A is selected from the group comprising polyethylene oxide (POE), nitrile butadiene rubber (NBR), polytetrahydrofuran (PTHF), polycarbonate, derivatives of cellulose, C1 to C4 polyalkylmethacrylate, or a mixture of the latter forming an interpenetrating (co)polymer network.

5. Material according to any of claims 1 to 4, wherein the polymer network or the IPN A is densified into polar chemical groups by branching the networks.

6. Material according to any of claims 1 to 5 wherein the polymer network A is polyethylene oxide (POE) having a content in hanging branches of 50% by weight based on the total weight of POE.

7. Material according to any of claims 1 to 6 wherein the polymer B is poly(3,4-ethylenedioxythiophene) (PEDOT).

8. Material according to any of claims 1 to 7 wherein the network layer of polymer (or IPN) A has a thickness from 10 to 500 micrometres.

9. Material according to any of claims 1 to 8, wherein the polymer B is interpenetrated in the network layer of polymer or the IPN A over a thickness from 0.5 to 30% with respect to the thickness of the network layer of polymer A.

10. Method for preparing a material according to any of claims 1 to 9, comprising the following successive steps:
(i) forming a polymer network layer or IPN A impregnated with monomer M_{B} precursor of the polymer B; wherein the monomer M_{B} is selected from the group comprising (3,4-ethylenedioxythiophene (EDOT), 3-4 propylenedioxythiophene (PRODOT), or one of these monomers substituted with an aliphatic chain, an alkoxy group or a polar group such as carboxylate, sulphonate, alcoholate;
(ii) the oxidative polymerisation of the monomer M_{E} into polymer B by placing the network layer of polymer or of IPN A impregnated with monomer M8 into contact with an oxidiser forming a material according to any of claims 1 to 9.

11. Method for preparing a material according to claim 10, wherein, during the step (i), the forming of the network layer of polymer or of IPN A impregnated with monomer M_{E} comprises a step of crosslinking of a polymer precursor A, with this precursor being a crosslinkable polymer, possibly in the presence of the monomer M_{E}.

12. Method for preparing a material according to claim 11 wherein, during the step (i):
- the precursor is chosen from the group comprising nitrile butadiene rubber (NBR), methylcellulose and cellulose acetate butyrate; and/or
- the crosslinking of the polymer precursor A is carried out by reaction with a chemical compound selected from the group comprising sulphur, peroxides, pluri-isocyanates and aldehydes.

13. Method for preparing a material according to any of claims 10 to 12 wherein, during the step (i), the forming of the network layer of polymer A or of IPN impregnated with monomer M_{B} comprises a step of polymerisation of a monomer or of a mixture of monomers M_{A} precursor(s) of the polymer A, possibly in the presence of the monomer M_{B}.

14. Method for preparing a material according to any of claims 10 to 13 wherein, during the step (i), the radical polymerisation is carried out according to one or several of the following conditions:
- the monomer or the mixture of monomers M_{A} is chosen from the group comprising poly(ethylene glycol)methacrylate (PEGM), poly(ethylene glycol)dimethacrylate (PEGDM), polymethyl methacrylate, polyacrylonitrile or a mixture of the latter;
- the monomer or the mixture of monomers MA is in the form of a mixture of two monomers M_{A1} and M_{A2};
- the monomer or the mixture of monomers M_{A} is in the form of an equimolar mixture of two monomers M_{A1} and M_{A2};
- The monomers M_{A1} and M_{A2} are respectively poly(ethylene glycol)methacrylate (PEGM) and poly(ethylene glycol)dimethacrylate (PEGDM);
- the monomer MB is initially present at the concentration from 1 to 20% by total weight of the monomer or of the mixture of monomers M_{A}, preferably at the concentration of 5%;
- the radical polymerisation is carried out in the presence of a radical initiator;
- the radical initiator is selected from the group comprising the azobis compounds of formula R-N=N-R' and peroxide compounds of formula R-O-O-R', R and R', identical or different, being selected from the group comprising alkyls, heteroalkyls, aryls, heteroaryls, possibly substituted with -CO1 -CN, -NHb, -NH groups;
- the radical initiator is initially present at the concentration from 1 to 5% by total weight of the monomer or of the mixture of monomers M_{A}.

15. Method according to any of claims 10 to 14 wherein the step (i) is carried out according to one or several of the following conditions:
- by thermal treatment or by photopolymerisation
- at a temperature of 40 to 100°C, preferably from 50 to 80°C;
- for a duration from 2 to 10 h, preferably from 4 to 6h.

16. Method according to any of claims 10 to 15 wherein the step (ii) is carried out according to one or several of the following conditions:
- the oxidiser is selected from the group comprising FeCl₃, ferric tosylate; ferric sulphate or ceric ammonium nitrate
- the putting into contact is carried out by immersion of the layer of the polymer network or of the IPN A impregnated with monomer M_{B} in a solution comprising the oxidiser;
- the solution comprising the oxidant has a concentration in oxidant from 0.1 to 2 mole/litre
- the solution comprising the oxidiser comprises a solvent selected from water, chloroform, dichloromethane, acetonitrile, C₁ to C₄ alcohols or a mixture of the latter;
- the putting into contact is carried out at a temperature of -10 to 80°C;
- the putting into contact is carried out for a duration from 10 minutes to 24h.

17. Method for preparing a material according to any of claims 1 to 9, comprising the following successive steps:
(i) the swelling of the polymer network (or IPN) A in an electrolytic medium that contains the monomer MB precursor of the polymer B; wherein the monomer MB is selected from the group comprising (3,4-ethylenedioxythiophene (EDOT), 3-4 propylenedioxythiophene (PRODOT), or one of these monomers substituted with an aliphatic chain, an alkoxy group or encore a polar group such as carboxylate, sulphonate, alcoholate,
(ii) the oxidative polymerisation of the monomer M_{B} into polymer B by elecropolymerisation of the monomer MB in contact with the face 1 of the network layer of polymer (or of IPN) A impregnated with electrolyte and monomer MB;
(iii) the swelling of the polymer network (or of the IPN) A in an electrolytic medium that contains the monomer M_{B} precursor of the polymer B;
(iv) the electropolymerisation of the monomer MB into polymer B in contact with the face 2 of the network layer of polymer (or of IPN) A impregnated with electrolyte and monomer MB forming a material according to any of claims 1 to 9.

18. Method for preparing a material according to any of claims 1 to 9, comprising the following successive steps:
(i) the swelling of the polymer network (or IPN) A in an electrolytic medium that contains the monomer M_{B} precursor of the polymer B, wherein the monomer MB is selected from the group comprising (3,4-ethylenedioxythiophene (EDOT), 3-4 propylenedioxythiophene (PRODOT), or one of these monomers substituted with an aliphatic chain, an alkoxy group or a polar group such as carboxylate, sulphonate, alcoholate;
(ii) the oxidative polymerisation of the monomer M_{B} into polymer B by elecropolymerisation of the monomer M_{E} in contact with the face 1 of the network layer of polymer A impregnated with electrolyte and monomer M_{E};
(iii) the swelling of the polymer network (or IPN) A in a solution of monomer M_{B} precursor of the polymer B;
(iv) the oxidative polymerisation of the monomer M_{B} into polymer B by putting into contact of the face 2 of the network layer of polymers A impregnated with electrolyte and monomer MB with an oxidiser forming a material according to any of claims 1 to 9.

19. Method for preparing a material according to any of claims 1 to 9 comprising the following successive steps:
(i) the swelling of a first polymer network (or IPN) A in an electrolytic medium that contains the monomer M_{B} precursor of the polymer B, wherein the monomer MB is chosen from the group comprising (3,4-ethylenedioxythiophene (EDOT), 3-4 propylenedioxythiophene (PRODOT), or one of these monomers substituted with an aliphatic chain, an alkoxy group or encore a polar group such as carboxylate, sulphonate, alcoholate;
(ii) the oxidative polymerisation of the monomer MB into polymer B by elecropolymerisation of the monomer M_{B} in contact with the face 1 of the network layer of polymers A impregnated with electrolyte and monomer M_{B} to lead to the material 1;
(iii) the swelling of a second polymer network (or IPN) A in an electrolytic medium that contains the monomer MB precursor of the polymer B;
(iv) the oxidative polymerisation of the monomer M_{B} into polymer B by elecropolymerisation of the monomer M_{B} in contact with the face 1 of the network layer of polymer (or IPN) A impregnated with electrolyte and monomer M_{B} to lead to the material 2;
(v) the assembly of the materials 1 and 2 under pressure forming a material according to any of claims 1 to 9.

20. Electromissive device comprising a material according to any of claims 1 to 9.

21. Device according to claim 20, comprising, furthermore, an electrolyte.

22. Device according to claim 21, wherein the electrolyte is present at a concentration between 20 and 150% by weight based on the total weight of the material.

23. Device according to one of claims 21 or 22, wherein the electrolyte is selected from organic salts or inorganic salts of imidazolium, pyrrolidium, quaternary ammonium, phosphonium, salts of lithium, sodium, in a solvent.

24. Device according to one of claims 21 or 22, wherein the electrolyte is an ionic liquid at a temperature less than 0°C selected from the salts of imidazolium, pyrrolidium, quaternary ammonium, phosphonium, used without solvent.

25. Usage of the material according to any of claims 1 to 9 in one of the following applications:
- as a stealth material, and/or
- as a material for improving thermal insulation, for example in buildings, and/or
- as a material for replacing the venetian blinds of artificial satellite panels, and/or
- as a material for controlling the temperature according to solar exposure or the external temperature.
